# EUROPEAN PATENT APPLICATION

(11) **EP 4 325 987 A1**
(43) Date of publication of application: **21.02.2024**
(21) Application number: 22806834.2
(22) Date of filing: 12.05.2022
(51) Int. Cl.: H04W 76/10

(54) **COMMUNICATION METHOD AND APPARATUS**

(30) Priority: 12.05.2021 CN 202110518537
(71) Applicant: Huawei Technologies Co., Ltd., Shenzhen, Guangdong 518129 (CN)
(72) Inventor: YANG, Linping, Shenzhen, Guangdong 518129 (CN); HU, Xiange, Shenzhen, Guangdong 518129 (CN); HU, Wen, Shenzhen, Guangdong 518129 (CN); QIANG, Li, Shenzhen, Guangdong 518129 (CN)
(74) Representative: Pfenning, Meinig & Partner mbB
(86) International application number: PCT/CN2022/092468
(87) International publication number: WO 2022/237872

(57) **Abstract**

This application provides a communication method and apparatus. The method includes: A session management function network element initiates a procedure of a first operation for a first session; the session management function network element receives a request to establish user-plane resources for the first session from an access and mobility management function network element in a process of performing the first operation; and the session management function network element determines a subsequent procedure based on the first operation. Therefore, the session management function network element may determine the subsequent operation procedure based on the first operation, thereby effectively ensuring user experience and smoothness of a service process.

## Description

### CROSS-REFERENCE TO RELATED APPLICATIONS

This application claims priority to Chinese Patent Application No. 202110518537.7, filed with the China National Intellectual Property Administration on May 12, 2021, and entitled "COMMUNICATION METHOD AND APPARATUS", which is incorporated herein by reference in its entirety.

### TECHNICAL FIELD

Embodiments of this application relate to the wireless communication field, and in particular, to a communication method and apparatus.

### BACKGROUND

In a communication system, both user equipment (user equipment, LTE) and a network side device may perform different operations for a same session. For example, in 5G, if the UE needs to send uplink data, the UE may trigger a request to establish user-plane resources. If the network side device determines that a protocol data unit (protocol data unit, PDU) session (PDU session) needs to be modified or a PDU session needs to be released, the network side device may initiate a procedure of modifying or releasing the PDU session. Therefore, for the same PDU session, there may be a scenario in which the procedure that is initiated by the LTE and that is of requesting to establish the user-plane resources is collided with the procedure that is initiated by the network side device and that is of modifying or releasing the PDU session. In the foregoing collision scenario, it is possible that a terminal device and a session management function network element each wait for a response message of a request operation initiated by itself until their respective timers expire. This affects a service process and user experience.

### SUMMARY

Embodiments of this application provide a communication method and apparatus, to resolve a problem that operations initiated by UE and a network side device for a same PDU session collides.

According to a first aspect, this application provides a communication method. The method includes: A session management function network element initiates a procedure of a first operation for a first session, and the session management function network element receives, from an access and mobility management function network element, a request to establish user-plane resources for the first session in a process of performing the first operation. The session management function network element determines a subsequent procedure based on a type of the first operation.

According to the foregoing method, the session management function network element may determine the subsequent operation procedure based on the type of the first operation, thereby effectively ensuring user experience and smoothness of a service process.

In a possible design, the first operation is modifying the first session; and when the session management function network element determines the subsequent procedure based on the type of the first operation, the session management function network element aborts a procedure of modifying the first session, and performs a procedure of establishing the user-plane resources for the first session.

According to the foregoing design, the session management function network element aborts the procedure of modifying the first session, and performs the procedure of establishing the user-plane resources for the first session. In this way, a case in which a terminal device and the session management function network element each wait for a response message for a request operation initiated by the itself, which causes expiring of their respective timers can be avoided.

In a possible design, the session management function network element stops a first timer, where the first timer includes a timer that waits for a response message for modifying the first session.

In a possible design, after the session management function network element completes the procedure of establishing the user-plane resources for the first session, the session management function network element re-initiates the procedure of modifying the first session.

According to the foregoing design, after completing the procedure of establishing the user-plane resources for the first session, the session management function network element may re-initiate the procedure of modifying the first session.

In a possible design, when the session management function network element performs the procedure of establishing the user-plane resources for the first session, the session management function network element sends a first message to the access and mobility management function network element, where the first message indicates that the user-plane resources for the first session are successfully established.

In a possible design, the first message is a session management context update response message, the session management context update response message includes one or more of the following: user plane context status information or session management information, the user plane context status information indicates that the user-plane resources for the first session are being activated, and the session management information includes a related parameter for establishing the user-plane resources for the first session.

In a possible design, the first operation is releasing the first session; and when the session management function network element determines the subsequent procedure based on the type of the first operation, the session management function network element rejects the request to establish the user-plane resources for the first session, and continues to perform a procedure of releasing the first session.

According to the foregoing design, the session management function network element rejects the request to establish the user-plane resources for the first session, and continues to perform the procedure of releasing the first session. In this way, a case in which a terminal device and the session management function network element each wait for a response message for a request operation initiated by itself, which causes expiring of their respective timers can be avoided.

In a possible design, the session management function network element receives a response message for releasing the first session.

In a possible design, when the session management function network element rejects the request to establish the user-plane resources for the first session, the session management function network element sends a second message to the access and mobility management function network element, where the second message indicates that the user-plane resources for the first session fail to be established.

In a possible design, the second message is a session management context update response message, the session management context update response message includes user plane context status information, and the user plane context status information indicates that the user-plane resources for the first session are deactivated.

In a possible design, the second message includes a first cause value, and the first cause value indicates a cause why the user-plane resources for the first session fail to be established.

In a possible design, the cause why the user-plane resources for the first session fail to be established indicates that the first session is performing the procedure of releasing the first session.

In a possible design, before the session management function network element receives the response message for the first operation, the session management function network element receives, from the access and mobility management function network element, the request to establish the user-plane resources for the first session.

In a possible design, the request to establish the user-plane resources for the first session is a session management context update request message, the session management context update request message includes one or more of the following: an operation type or an identifier of an activated session, the operation type indicates user-plane activation, and the identifier of the activated session includes an identifier of the first session.

In a possible design, the type of the first operation is modifying the first session; and when the session management function network element determines the subsequent procedure based on the type of the first operation, the session management function network element rejects the request to establish the user-plane resources for the first session, and continues to perform a procedure of modifying the first session.

According to the foregoing design, the session management function network element rejects the request to establish the user-plane resources for the first session, and continues to perform the procedure of modifying the first session. In this way, a case in which a terminal device and the session management function network element each wait for a response message for a request operation initiated byitself, which causes expiring of their respective timers can be avoided.

In a possible design, the type of the first operation is modifying the first session; and when the session management function network element determines the subsequent procedure based on the type of the first operation, the session management function network element continues to perform the procedure of modifying the first session and the procedure of establishing the user-plane resources for the first session.

According to the foregoing design, the session management function network element simultaneously performs the two procedures. In this way, a case in which a terminal device and the session management function network element each wait for a response message for a request operation initiated by itself, which causes expiring of their respective timers can be avoided.

According to a second aspect, this application provides a communication apparatus. The apparatus includes a transceiver unit and a processing unit. The transceiver unit is configured to: initiate a procedure of a first operation for a first session, and receive, from an access and mobility management function network element, a request to establish user-plane resources for the first session in a process of performing the first operation. The processing unit is configured to determine a subsequent procedure based on a type of the first operation.

In a possible design, the first operation is modifying the first session; and the processing unit is specifically configured to: abort a procedure of modifying the first session, and perform a procedure of establishing the user-plane resources for the first session.

In a possible design, the processing unit is configured to stop a first timer, where the first timer includes a timer that waits for a response message for modifying the first session.

In a possible design, the transceiver unit is configured to: after completing the procedure of establishing the user-plane resources for the first session, re-initiate the procedure of modifying the first session.

In a possible design, the transceiver unit is configured to: when performing the procedure of establishing the user-plane resources for the first session, send a first message to the access and mobility management function network element, where the first message indicates that the user-plane resources for the first session are successfully established.

In a possible design, the first message is a session management context update response message, the session management context update response message includes one or more of the following: user plane context status information or session management information, the user plane context status information indicates that the user-plane resources for the first session are being activated, and the session management information includes a related parameter for establishing the user-plane resources for the first session.

In a possible design, the first operation is releasing the first session; and the processing unit is specifically configured to: reject the request to establish the user-plane resources for the first session, and continue to perform a procedure of releasing the first session.

In a possible design, the transceiver unit is configured to receive a response message for releasing the first session.

In a possible design, the transceiver unit is configured to: when rejecting the request to establish the user-plane resources for the first session, send a second message to the access and mobility management function network element, where the second message indicates that the user-plane resources for the first session fail to be established.

In a possible design, the second message is a session management context update response message, the session management context update response message includes user plane context status information, and the user plane context status information indicates that the user-plane resources for the first session are deactivated.

In a possible design, the second message includes a first cause value, and the first cause value indicates a cause why the user-plane resources for the first session fail to be established.

In a possible design, the cause why the user-plane resources for the first session fail to be established indicates that the first session is performing the procedure of releasing the first session.

In a possible design, the transceiver unit is configured to: before receiving the response message for the first operation, receive, from the access and mobility management function network element, the request to establish the user-plane resources for the first session.

In a possible design, the request to establish the user-plane resources for the first session is a session management context update request message, the session management context update request message includes one or more of the following: an operation type or an identifier of an activated session, the operation type indicates user-plane activation, and the identifier of the activated session includes an identifier of the first session.

In a possible design, the type of the first operation is modifying the first session; and the processing unit is configured to: when determining the subsequent procedure based on the type of the first operation, reject the request to establish the user-plane resources for the first session, and continue to perform a procedure of modifying the first session.

In a possible design, the type of the first operation is modifying the first session; and the processing unit is configured to: when determining the subsequent procedure based on the type of the first operation, continue to perform the procedure of modifying the first session and the procedure of establishing the user-plane resources for the first session.

It should be noted that, for technical effects of the second aspect and any possible design of the second aspect, refer to technical effects of the corresponding first aspect and any possible design of the first aspect. Details are not described again.

According to a third aspect, this application provides a communication method. The method includes:
A session management function network element sends a first message to an access and mobility management function network element, where the first message is used to request a first operation, and the first operation includes modifying a first session or releasing a first session. After the session management function network element sends the first message, the session management function network element receives a second message from the access and mobility management function network element, where the second message is used to request to establish user-plane resources for the first session. The session management function network element aborts a procedure of the first operation, and the session management function network element performs a procedure of establishing the user-plane resources for the first session when the session management function network element determines that no response message for the first message is received and the second message is received.

According to the foregoing method, when the procedure of the first operation is collided with a procedure that is initiated by a terminal device and that is of establishing user-plane resources for a PDU session, that is, an operation initiated by a network side device is collided with an operation initiated by the terminal device for a same PDU session, the session management function network element aborts the current procedure of the first operation, and performs the procedure of establishing the user-plane resources for the first session. In this way, a case in which the terminal device and the session management function network element each wait for a response message for a request operation initiated by itself, which causes expiring of their respective timers can be avoided, thereby effectively ensuring user experience and smoothness of a service process.

In a possible design, the first operation is modifying the first session; and when the session management function network element determines that no response message for the first message is received, the second message is received, and no user-plane resources for the first session are requested to be established, the session management function network element aborts the procedure of the first operation, and the session management function network element performs the procedure of establishing the user-plane resources for the first session.

According to the foregoing design, when the session management function network element receives no response message for the first message, receives the second message, and requests to establish no user-plane resources for the first session, the session management function network element aborts the procedure of the first operation, and performs the procedure of establishing the user-plane resources for the first session.

In a possible design, the method further includes: The session management function network element stops a first timer, where the first timer includes a timer that waits for the response message for the first message.

According to the foregoing design, when the session management function network element aborts the procedure of the first operation, the session management function network element stops the first timer.

In a possible design, the method further includes: The session management function network element sends first indication information to the access and mobility management function network element, where the first indication information indicates the first operation.

According to the foregoing design, the first indication information is used to enable the terminal device to discard the first message based on the first indication information.

In a possible design, if the first operation is modifying the first session, the first message includes a PDU session modification command, and the PDU session modification command includes an identifier of the first session; or if the first operation is releasing the first session, the first message includes a PDU session release command, and the PDU session release command includes an identifier of the first session.

In a possible design, the second message is a session management context update request message, the session management context update request message includes one or more of the following: an operation type or an identifier of an activated session, the operation type indicates user-plane activation, and the identifier of the activated session includes the identifier of the first session.

In a possible design, the procedure of establishing, by the session management function network element, the user-plane resources for the first session may specifically include but is not limited to one or more of the following steps: The session management function network element sends a session modification request message to a user plane function network element, where the session modification request message is used to configure downlink tunnel information for the user plane function network element. The session management function network element receives a session modification response message from the user plane function network element, where the session modification response message is used to respond to the session modification request message. The session management function network element sends a third message to the access and mobility management function network element in response to the second message, where the third message indicates that the user-plane resources for the first session are successfully established.

In a possible design, the third message is a session management context update response message, the session management context update response message includes one or more of the following: user plane context status information or session management information, the user plane context status information indicates that the user-plane resources for the first session are being activated, and the session management information includes a related parameter for establishing the user-plane resources for the first session.

In a possible design, after the session management function network element performs the procedure of establishing the user-plane resources for the first session, the session management function network element sends the first message to the access and mobility management function network element.

According to a fourth aspect, this application provides a communication method. The method includes:
A session management function network element sends a first message to an access and mobility management function network element, where the first message is used to request a first operation, and the first operation includes modifying a first session or releasing a first session. After the session management function network element sends the first message, the session management function network element receives a second message from the access and mobility management function network element, where the second message is used to request to establish user-plane resources for the first session. The session management function network element sends a third message to the access and mobility management function network element in response to the second message when the session management function network element determines that no response message for the first message is received and the second message is received, where the third message indicates that the user-plane resources for the first session fail to be established or the user-plane resources for the first session are successfully established.

According to the foregoing method, when a procedure of the first operation is collided with a procedure that is initiated by a terminal device and that is of establishing user-plane resources for a PDU session, that is, an operation initiated by a network side device is collided with an operation initiated by the terminal device for a same PDU session, the session management function network element sends the third message to the access and mobility management function network element, where the third message indicates that the user-plane resources for the first session fail to be established or are successfully established. In this way, a case in which the terminal device and the session management function network element each wait for a response message for a request operation initiated by itself, which causes expiring of their respective timers can be avoided, thereby effectively ensuring user experience and smoothness of a service process.

In a possible design, the first operation is modifying the first session; and when the session management function network element determines that no response message for the first message is received, the second message is received, and no user-plane resources for the first session are requested to be established, the session management function network element sends the third message to the access and mobility management function network element in response to the second message.

According to the foregoing design, when the session management function network element receives no response message for the first message, receives the second message, and requests to establish no user-plane resources for the first session, the session management function network element sends the third message to the access and mobility management function network element in response to the second message.

In a possible design, when the third message indicates that the user-plane resources for the first session fail to be established, the third message includes a first cause value, and the first cause value indicates a cause why the user-plane resources for the first session fail to be established.

In a possible design, the cause why the user-plane resources for the first session fail to be established indicates that the first session is performing a procedure of the first operation.

In a possible design, when the third message indicates that the user-plane resources for the first session fail to be established, the third message includes a session management context update response message and the first cause value, the session management context update response message includes user plane context status information, and the user plane context status information indicates that the user-plane resources for the first session are deactivated.

In a possible design, when the third message indicates that the user-plane resources for the first session are successfully established, the third message is a session management context update response message, the session management context update response message includes one or more of the following: user plane context status information or session management information, the user plane context status information indicates that the user-plane resources for the first session are being activated, and the session management information includes a related parameter for establishing the user-plane resources for the first session.

In a possible design, the method further includes: The session management function network element sends first indication information to the access and mobility management function network element, where the first indication information indicates the first operation.

According to the foregoing design, the first indication information is used to enable the terminal device to cache the first message or the response message for the first message based on the first indication information.

In a possible design, if the first operation is modifying the first session, the first message includes a PDU session modification command, and the PDU session modification command includes an identifier of the first session; and the response message for the first message is a PDU session modification complete command, and the PDU session modification complete command includes the identifier of the first session; or if the first operation is releasing the first session, the first message includes a PDU session release command, and the PDU session release command includes an identifier of the first session; and the response message for the first message is a PDU session release complete command, and the PDU session release complete command includes the identifier of the first session.

In a possible design, the second message is a session management context update request message, the session management context update request message includes one or more of the following: an operation type or an identifier of an activated session, the operation type indicates user-plane activation, and the identifier of the activated session includes the identifier of the first session.

In a possible design, after the session management function network element sends the third message to the access and mobility management function network element, the session management function network element receives the response message for the first message from the access and mobility management function network element.

According to a fifth aspect, this application provides a communication method. The method includes: A terminal device sends a service request message to an access and mobility management function network element, where the service request message is used to request to establish user-plane resources for a first session; the terminal device receives a first message from the access and mobility management function network element, where the first message is used to request a first operation, and the first operation includes modifying the first session or releasing the first session; and the terminal device caches the first message or a response message for the first message until receiving a service accept message from the access and mobility management function network element, and send the response message for the first message to the access and mobility management function network element.

According to the foregoing method, when a procedure that is initiated by the session management function network element and that is of the first operation is collided with a procedure that is initiated by the terminal device and that is of establishing user-plane resources for a PDU session, that is, an operation initiated by a network side device is collided with an operation initiated by the terminal device for a same PDU session, the terminal device may cache the first message or the response message for the first message until receiving the service accept message from the access and mobility management function network element and send the response message for the first message to the access and mobility management function network element, thereby effectively ensuring user experience and smoothness of a service process.

In a possible design, the terminal device includes a session management layer and a mobility management layer; and before the terminal device caches the response message for the first message, the mobility management layer sends the first message to the session management layer, and the mobility management layer receives the response message for the first message from the session management layer.

According to the foregoing design, the mobility management layer first sends the first message to the session management layer, and then caches the response message that is of the first message and that is fed back by the session management layer.

In a possible design, the terminal device includes the session management layer and the mobility management layer; and when the terminal device caches the first message until receiving the service accept message from the access and mobility management function network element and sends the response message for the first message to the access and mobility management function network element, the mobility management layer caches the first message until receiving the service accept message, and the mobility management layer sends the first message to the session management layer; and the mobility management layer receives the response message for the first message from the session management layer, and the mobility management layer sends the response message for the first message to the access and mobility management function network element.

According to the foregoing design, the mobility management layer first caches the first message, and sends the first message to the session management layer after receiving the service accept message.

In a possible design, the terminal device receives first indication information from the access and mobility management function network element, where the first indication information indicates the first operation. In this case, the terminal device caches the first message or the response message for the first message based on the first indication information.

According to the foregoing design, the terminal device may cache the first message or the response message for the first message based on the first indication information.

In a possible design, if the first operation is modifying the first session, the first message includes a PDU session modification command, and the PDU session modification command includes an identifier of the first session; and the response message for the first message is a PDU session modification complete command, and the PDU session modification complete command includes the identifier of the first session; or if the first operation is releasing the first session, the first message includes a PDU session release command, and the PDU session release command includes an identifier of the first session; and the response message for the first message is a PDU session release complete command, and the PDU session release complete command includes the identifier of the first session.

In a possible design, the service request message includes uplink data status information, and the uplink data status information indicates the identifier of the first session.

In a possible design, the service accept message includes an information element indicating a PDU session activation result, and the information element indicating the PDU session activation result indicates that the user-plane resources for the first session are successfully established.

In a possible design, the service accept message includes an information element indicating a PDU session activation result, and the information element indicating the PDU session activation result indicates that the user-plane resources for the first session fail to be established; or the service accept message includes an information element indicating a PDU session activation result and/or an information element indicating an error cause of the PDU session activation result, the information element indicating the PDU session activation result indicates that the user-plane resources for the first session fail to be established, and the information element indicating the error cause of the PDU session activation result indicates a cause why the user-plane resources for the first session fail to be established.

In a possible design, the cause why the user-plane resources for the first session fail to be established includes that the first session is performing a procedure of the first operation.

In a possible design, the first operation is modifying the first session; and after that the terminal device sends the response message for the first message to the access and mobility management function network element, the method further includes: The terminal device resends the service request message to the access and mobility management function network element.

According to the foregoing design, the terminal device may re-initiate the procedure of requesting to establish the user-plane resources for the first session.

According to a sixth aspect, this application provides a communication method. The method includes: A terminal device sends a service request message to an access and mobility management function network element, where the service request message is used to request to establish user-plane resources for a first session; the terminal device receives a first message from the access and mobility management function network element, where the first message is used to request a first operation, and the first operation includes modifying the first session or releasing the first session; and when the terminal device determines that the service request message has been sent and no response message for the service request message is received, the terminal device discards the first message.

According to the foregoing design, when a procedure that is initiated by the session management function network element and that is of the first operation is collided with a procedure that is initiated by the terminal device and that is of establishing user-plane resources for a PDU session, the terminal device may discard the first message.

In a possible design, the terminal device receives first indication information from the access and mobility management function network element, where the first indication information indicates the first operation; and that the terminal device discards the first message includes: The terminal device discards the first message based on the first indication information.

According to the foregoing design, the terminal device may discard the first message based on the first indication information.

In a possible design, the service request message includes uplink data status information, and the uplink data status information indicates the identifier of the first session.

In a possible design, if the first operation is modifying the first session, the first message includes a PDU session modification command, and the PDU session modification command includes the identifier of the first session; or if the first operation is releasing the first session, the first message includes a PDU session release command, and the PDU session release command includes the identifier of the first session.

According to a seventh aspect, this application provides a communication apparatus. The apparatus includes a transceiver unit and a processing unit. The transceiver unit is configured to: send a first message to an access and mobility management function network element, where the first message is used to request a first operation, and the first operation includes modifying a first session or releasing a first session; and after sending the first message, receive a second message from the access and mobility management function network element, where the second message is used to request to establish user-plane resources for the first session. The processing unit is configured to: abort a procedure of the first operation, and perform a procedure of establishing the user-plane resources for the first session when determining that no response message for the first message is received and the second message is received.

In a possible design, the first operation is modifying the first session; and the processing unit is configured to: when determining that no response message for the first message is received, the second message is received, and no user-plane resources for the first session are requested to be established, abort the procedure of the first operation, and perform the procedure of establishing the user-plane resources for the first session.

In a possible design, the processing unit is configured to stop a first timer, where the first timer includes a timer that waits for the response message for the first message.

In a possible design, the transceiver unit is configured to send first indication information to the access and mobility management function network element, and the first indication information indicates the first operation.

In a possible design, if the first operation is modifying the first session, the first message includes a PDU session modification command, and the PDU session modification command includes an identifier of the first session; or if the first operation is releasing the first session, the first message includes a PDU session release command, and the PDU session release command includes an identifier of the first session.

In a possible design, the second message is a session management context update request message, the session management context update request message includes one or more of the following: an operation type or an identifier of an activated session, the operation type indicates user-plane activation, and the identifier of the activated session includes the identifier of the first session.

In a possible design, that the processing unit invokes the transceiver unit to perform the procedure of establishing the user-plane resources for the first session may specifically include the following steps: sending a session modification request message to a user plane function network element, where the session modification request message is used to configure downlink tunnel information for the user plane function network element; receiving a session modification response message from the user plane function network element, where the session modification response message is used to respond to the session modification request message; and sending a third message to the access and mobility management function network element in response to the second message, where the third message indicates that the user-plane resources for the first session are successfully established.

In a possible design, the third message is a session management context update response message, the session management context update response message includes one or more of the following: user plane context status information or session management information, the user plane context status information indicates that the user-plane resources for the first session are being activated, and the session management information includes a related parameter for establishing the user-plane resources for the first session.

In a possible design, the transceiver unit is configured to: after performing the procedure of establishing the user-plane resources for the first session, send the first message to the access and mobility management function network element.

According to an eighth aspect, this application provides a communication apparatus. The apparatus includes a transceiver unit and a processing unit. The transceiver unit is configured to send a first message to an access and mobility management function network element, where the first message is used to request a first operation, and the first operation includes modifying a first session or releasing a first session; and the transceiver unit is configured to: after sending the first message, receive a second message from the access and mobility management function network element, where the second message is used to request to establish user-plane resources for the first session. The transceiver unit is configured to send a third message to the access and mobility management function network element in response to the second message when the processing unit determines that no response message for the first message is received and the second message is received, where the third message indicates that the user-plane resources for the first session fail to be established or the user-plane resources for the first session are successfully established.

In a possible design, the first operation is modifying the first session; and when the session management function network element determines that no response message for the first message is received, the second message is received, and no user-plane resources for the first session are requested to be established, the session management function network element sends the third message to the access and mobility management function network element in response to the second message.

In a possible design, when the third message indicates that the user-plane resources for the first session fail to be established, the third message includes a first cause value, and the first cause value indicates a cause why the user-plane resources for the first session fail to be established.

In a possible design, the cause why the user-plane resources for the first session fail to be established indicates that the first session is performing a procedure of the first operation.

In a possible design, when the third message indicates that the user-plane resources for the first session fail to be established, the third message includes a session management context update response message and the first cause value, the session management context update response message includes user plane context status information, and the user plane context status information indicates that the user-plane resources for the first session are deactivated.

In a possible design, when the third message indicates that the user-plane resources for the first session are successfully established, the third message is a session management context update response message, the session management context update response message includes one or more of the following: user plane context status information or session management information, the user plane context status information indicates that the user-plane resources for the first session are being activated, and the session management information includes a related parameter for establishing the user-plane resources for the first session.

In a possible design, the transceiver unit is configured to send first indication information to the access and mobility management function network element, and the first indication information indicates the first operation.

In a possible design, if the first operation is modifying the first session, the first message includes a PDU session modification command, and the PDU session modification command includes an identifier of the first session; and the response message for the first message is a PDU session modification complete command, and the PDU session modification complete command includes the identifier of the first session; or if the first operation is releasing the first session, the first message includes a PDU session release command, and the PDU session release command includes an identifier of the first session; and the response message for the first message is a PDU session release complete command, and the PDU session release complete command includes the identifier of the first session.

In a possible design, the second message is a session management context update request message, the session management context update request message includes one or more of the following: an operation type or an identifier of an activated session, the operation type indicates user-plane activation, and the identifier of the activated session includes the identifier of the first session.

In a possible design, the transceiver unit is configured to: after sending the third message to the access and mobility management function network element, receive the response message for the first message from the access and mobility management function network element.

According to a ninth aspect, this application provides a communication apparatus, and the apparatus includes a transceiver unit and a processing unit. The transceiver unit is configured to: send a service request message to an access and mobility management function network element, where the service request message is used to request to establish user-plane resources for a first session; and receive a first message from the access and mobility management function network element, where the first message is used to request a first operation, and the first operation includes modifying the first session or releasing the first session. The processing unit is configured to cache the first message or a response message for the first message until the transceiver unit receives a service accept message from the access and mobility management function network element, and invoke the transceiver unit to send the response message for the first message to the access and mobility management function network element.

In a possible design, the apparatus includes a session management layer and a mobility management layer; and before caching the response message for the first message, the mobility management layer sends the first message to the session management layer, and the mobility management layer receives the response message for the first message from the session management layer.

In a possible design, the apparatus includes the session management layer and the mobility management layer; when caching the first message until receiving the service accept message from the access and mobility management function network element and sending the response message for the first message to the access and mobility management function network element, the mobility management layer caches the first message until receiving the service accept message, and the mobility management layer sends the first message to the session management layer; and the mobility management layer receives the response message for the first message from the session management layer, and the mobility management layer sends the response message for the first message to the access and mobility management function network element.

In a possible design, the transceiver unit is configured to receive first indication information from the access and mobility management function network element, and the first indication information indicates the first operation. The processing unit is configured to cache the first message or the response message for the first message based on the first indication information.

In a possible design, if the first operation is modifying the first session, the first message includes a PDU session modification command, and the PDU session modification command includes an identifier of the first session; and the response message for the first message is a PDU session modification complete command, and the PDU session modification complete command includes the identifier of the first session; or if the first operation is releasing the first session, the first message includes a PDU session release command, and the PDU session release command includes an identifier of the first session; and the response message for the first message is a PDU session release complete command, and the PDU session release complete command includes the identifier of the first session.

In a possible design, the service request message includes uplink data status information, and the uplink data status information indicates the identifier of the first session.

In a possible design, the service accept message includes an information element indicating a PDU session activation result, and the information element indicating the PDU session activation result indicates that the user-plane resources for the first session are successfully established.

In a possible design, the service accept message includes an information element indicating a PDU session activation result, and the information element indicating the PDU session activation result indicates that the user-plane resources for the first session fail to be established; or the service accept message includes an information element indicating a PDU session activation result and an information element indicating an error cause of the PDU session activation result, the information element indicating the PDU session activation result indicates that the user-plane resources for the first session fail to be established, and the information element indicating the error cause of the PDU session activation result indicates a cause why the user-plane resources for the first session fail to be established.

In a possible design, the cause why the user-plane resources for the first session fail to be established includes that the first session is performing a procedure of the first operation.

In a possible design, the first operation is modifying the first session; and the transceiver unit is configured to: after sending the response message for the first message to the access and mobility management function network element, resend the service request message to the access and mobility management function network element.

According to the foregoing design, the terminal device may re-initiate the procedure of requesting to establish the user-plane resources for the first session.

According to a tenth aspect, this application provides a communication apparatus. The apparatus includes a transceiver unit and a processing unit. The transceiver unit is configured to: send a service request message to an access and mobility management function network element, where the service request message is used to request to establish user-plane resources for a first session; and receive a first message from the access and mobility management function network element, where the first message is used to request a first operation, and the first operation includes modifying the first session or releasing the first session. The processing unit is configured to: when determining that the service request message has been sent and no response message for the service request message is received, discard the first message.

In a possible design, the transceiver unit is configured to receive first indication information from the access and mobility management function network element, and the first indication information indicates the first operation. The processing unit is configured to discard the first message based on the first indication information.

In a possible design, the service request message includes uplink data status information, and the uplink data status information indicates an identifier of the first session.

In a possible design, if the first operation is modifying the first session, the first message includes a PDU session modification command, and the PDU session modification command includes the identifier of the first session; or if the first operation is releasing the first session, the first message includes a PDU session release command, and the PDU session release command includes the identifier of the first session.

According to an eleventh aspect, this application further provides an apparatus. The apparatus may perform the foregoing method design. The apparatus may be a chip or a circuit that can perform a function corresponding to the foregoing method, or a device including the chip or the circuit.

In a possible implementation, the apparatus includes: a memory, configured to store computer-executable program code; and a processor, where the processor is coupled to the memory. The program code stored in the memory includes instructions. When the processor executes the instructions, the apparatus or a device in which the apparatus is installed is enabled to perform the method in any one of the foregoing possible designs.

The apparatus may further include a communication interface. The communication interface may be a transceiver. Alternatively, if the apparatus is a chip or a circuit, the communication interface may be an input/output interface of the chip, for example, an input/output pin.

In a possible design, the apparatus includes corresponding functional units, which are respectively configured to implement the steps in the foregoing method. The function may be implemented by hardware, or may be implemented by executing corresponding software by hardware. The hardware or the software includes one or more units corresponding to the foregoing function.

According to a twelfth aspect, an embodiment of this application provides a computer-readable storage medium, where the computer-readable storage medium stores a computer program, and when the computer program is run on an apparatus, the method in any one of the foregoing possible designs is performed.

According to a thirteenth aspect, an embodiment of this application provides a computer program product, where the computer program product includes a computer program, and when the computer program is run on an apparatus, the method in any one of the foregoing possible designs is performed.

### BRIEF DESCRIPTION OF DRAWINGS

FIG. 1A is a schematic diagram 1 of an architecture of a mobile communication system to which an embodiment of this application is applied;
FIG. 1B is a schematic diagram 2 of an architecture of a mobile communication system to which an embodiment of this application is applied;
FIG. 2 is a schematic diagram in which UE initiates a specific procedure of establishing user-plane resources for a PDU session according to an embodiment of this application;
FIG. 3 is a schematic diagram in which a network side device initiates a procedure of modifying a PDU session according to an embodiment of this application;
FIG. 4 is a schematic diagram of a scenario in which a procedure that is initiated by a network side device and that is of modifying a PDU session is collided with a procedure that is initiated by LTE and that is of establishing user-plane resources for a PDU session according to an embodiment of this application;
FIG. 5 is an overview flowchart 1 of a communication method according to an embodiment of this application;
FIG. 6 is an overview flowchart 2 of a communication method according to an embodiment of this application;
FIG. 7 is a schematic diagram 1 in which a terminal device sends a response message for a first message to an access and mobility management function network element according to an embodiment of this application;
FIG. 8 is a schematic diagram 2 in which a terminal device sends a response message for a first message to an access and mobility management function network element according to an embodiment of this application;
FIG. 9 is a schematic diagram 1 of a processing process of a collision between a procedure that is initiated by a network side device and that is of modifying a PDU session and a procedure that is initiated by LTE and that is of establishing user-plane resources according to an embodiment of this application;
FIG. 10 is a schematic diagram 2 of a processing process of a collision between a procedure that is initiated by a network side device and that is of modifying a PDU session and a procedure that is initiated by LTE and that is of establishing user-plane resources according to an embodiment of this application;
FIG. 11 is a schematic diagram 3 of a processing process of a collision between a procedure that is initiated by a network side device and that is of modifying a PDU session and a procedure that is initiated by LTE and that is of establishing user-plane resources according to an embodiment of this application;
FIG. 12 is a schematic diagram 1 of a structure of an apparatus according to an embodiment of this application; and
FIG. 13 is a schematic diagram 2 of a structure of an apparatus according to an embodiment of this application.

### DESCRIPTION OF EMBODIMENTS

The following clearly and completely describes the technical solutions in embodiments of this application with reference to the accompanying drawings in embodiments of this application. It is clear that the described embodiments are merely some but not all of embodiments of this application. In the specification, claims, and accompanying drawings of this application, the terms "first", "second", and corresponding terms, such as reference numerals, are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

In descriptions of this application, "/" means "or" unless otherwise specified. For example, A/B may represent A or B. In this application, "and/or" describes only an association relationship for describing associated objects and represents that three relationships may exist. For example, A and/or B may represent the following three cases: Only A exists, both A and B exist, and only B exists. In addition, in the descriptions of this application, "at least one item" means one or more items, and "a plurality of items" means two or more items. "At least one item (piece) of the following" or a similar expression thereof means any combination of these items, including a singular item (piece) or any combination of plural items (pieces). For example, at least one (item) of a, b, or c may indicate a, b, c, a and b, a and c, b and c, or a, b, and c, where a, b, and c may be in a singular form or a plural form.

The technical solutions in embodiments of this application may be applied to various communication systems, for example, a wideband code division multiple access (Wideband Code Division Multiple Access, WCDMA) system, a general packet radio service (general packet radio service, GPRS) system, a long term evolution (Long Term Evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a fifth generation (5th generation, 5G) system, or a future sixth generation communication system.

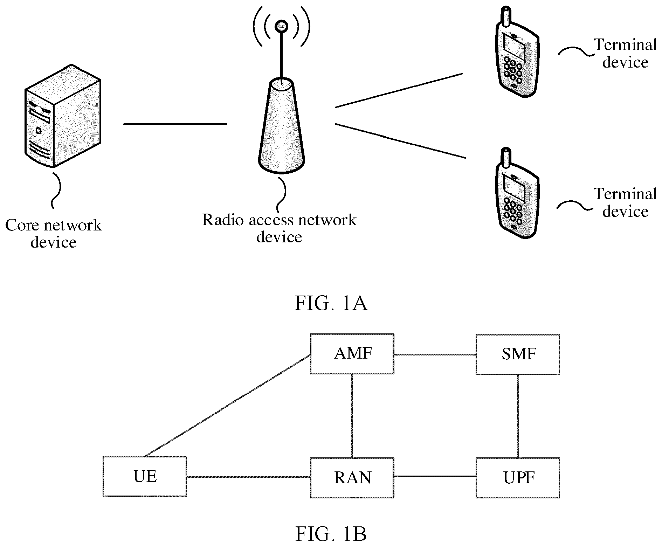

FIG. 1A and FIG. 1B each are a schematic diagram of an architecture of a mobile communication system to which an embodiment of this application is applied. A terminal device is connected to a radio access network device in a wireless manner, and the radio access network device is connected to a core network device in a wireless or wired manner. The core network device and the radio access network device may be independent and different physical devices, or functions of the core network device and logical functions of the radio access network device are integrated into a same physical device, or some of functions of the core network device and some of functions of the radio access network device are integrated into one physical device. The terminal device may be located at a fixed position, or may be mobile. FIG. 1A and FIG. 1B are merely schematic diagrams. The communication system may further include another network device.

The core network device includes a session management network element, an access management network element, a user plane function network element, and the like.

The session management network element is mainly configured to: manage a session, assign and manage an internet protocol (internet protocol, IP) address of a terminal device, select an endpoint that can manage a user equipment plane function interface and a policy control or charging function interface, perform downlink data notification, and the like. In 5G communication, the session management network element may be a session management function (session management function, SMF) network element. In future communication such as 6G communication, the session management function network element may still be an SMF network element or have another name. This is not limited in this application. Nsmf is a service-based interface provided by an SMF. The SMF may communicate with another network function through Nsmf.

The access management network element is mainly configured to perform mobility management, access management, and the like. The access management network element may be configured to implement a function, for example, lawful interception or access authorization (or authentication), in mobility management entity (mobility management entity, MME) functions other than session management. In 5G communication, the access management network element may be an access and mobility management function (access and mobility management function, AMF) network element. In future communication such as 6G communication, the access management network element may still be an AMF network element or have another name. This is not limited in this application. Namf is a service-based interface provided by the AMF. The AMF may communicate with another network function through Namf.

The user plane (user plane function, UPF) network element is configured to perform packet routing and forwarding, perform quality of service (quality of service, QoS) processing on user plane data, and the like. In 5G communication, the user plane network element may be a user plane function (user plane function, UPF) network element. In future communication such as 6G communication, the user plane network element may still be a UPF network element or have another name. This is not limited in this application.

The radio access device is a radio access network (radio access network, RAN), and is configured to implement a function related to radio access. The radio network device may be a base station (base station), an evolved NodeB (evolved NodeB, eNodeB), a transmission reception point (transmission reception point, TRP), a next generation NodeB (next generation NodeB, gNB) in a 5G mobile communication system, a base station in a future mobile communication system, an access node in a Wi-Fi system, or the like. Alternatively, the radio network device may be a module or a unit that implements some of functions of a base station, for example, may be a central unit (central unit, CU), or a distributed unit (distributed unit, DU). A specific technology and a specific device form that are used by the radio access network device are not limited in embodiments of this application.

The terminal device may also be referred to as a terminal, user equipment (user equipment, UE), a mobile station, a mobile terminal, or the like. The terminal device may be a mobile phone, a tablet computer, a computer having a wireless transceiver function, a virtual reality terminal device, an augmented reality terminal device, a wireless terminal in industrial control, a wireless terminal in self-driving, a wireless terminal in remote surgery, a wireless terminal in a smart grid, a wireless terminal in transportation safety, a wireless terminal in a smart city, a wireless terminal in a smart home, or the like. A specific technology and a specific device form that are used by the terminal device are not limited in embodiments of this application.

In addition, the terminal device may be specifically divided into a 5GS session management (5GS session management, 5GSM) layer and a 5GS mobility management (5GS mobility management, 5GMM) layer. The 5GSM layer is responsible for session management of the terminal device. The 5GMM layer is responsible for mobility management of the terminal device, requests to establish a service connection for an upper-layer service, and requests to establish user-plane resources for uplink data sending.

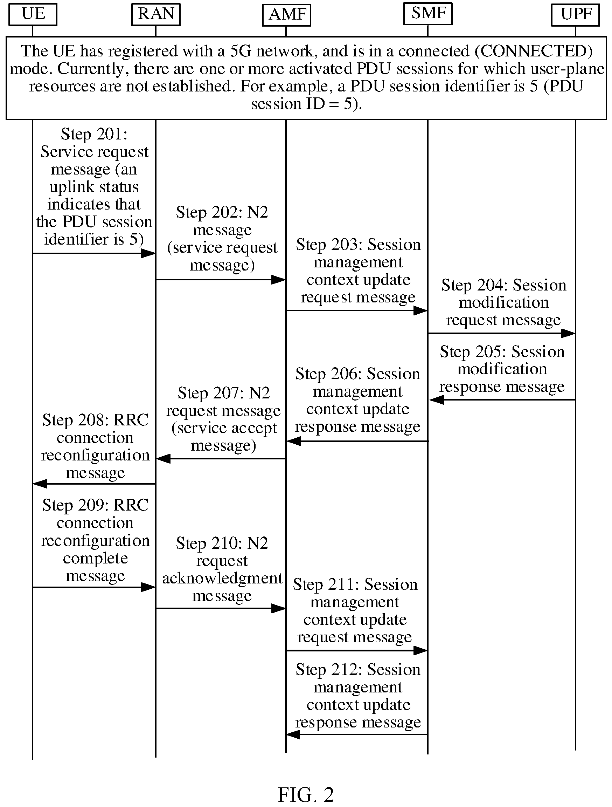

The following describes a procedure that is initiated by UE and that is of establishing user-plane resources for a PDU session. It should be noted that a procedure shown in FIG. 2 is a non-collision scenario. For example, the UE has registered with a 5G network, and the UE is in a connected mode. Currently, there is a context of an activated PDU session. For example, an identifier of the PDU session is PDU Session ID = 5. The following uses an example in which the identifier of the PDU session is PDU session ID = 5 to describe the specific procedure that is initiated by the UE for the PDU session and that is of establishing the user-plane resources for the PDU session, as shown in FIG. 2.

Step 201: LTE sends a service request (service request) message to a RAN.

The service request message includes uplink data status (uplink data status) information, and the uplink data status information indicates a PDU session ID (for example, the PDU session ID = 5).

For example, if the uplink data status information indicates that PDU session ID = 5, it indicates that the UE requests to establish user-plane resources for a PDU session whose PDU session ID = 5.

Step 202: The RAN sends an N2 message (N2 message) to an AMF. The N2 message includes the service request message in step 201.

Step 203: The AMF sends a session management context update request (Nsmf_PDUSession_UpdateSMConext Request) message to an SMF.

The AMF determines, based on the service request message in step 202, that the UE requests to establish the user-plane resources for the PDU session whose PDU session ID = 5. The session management context update request message includes, for example, one or more of the following: an operation type (operation type) or an identifier (for example, PDU session ID = 5) of an activated PDU session (PDU session(s) to be-re-activated), and the operation type indicates user-plane activation (UP activate).

Step 204: The SMF sends a session modification request (N4 session modification request) message to a UPF.

The session modification request message is used to configure downlink tunnel information (downlink tunnel information) for the UPF.

Step 205: The UPF sends a session modification response (N4 session modification response) message to the SMF.

The session modification response message is used to respond to the session modification request message in step 204.

Step 206: The SMF sends a session management context update response (Nsmf_PDUSession_UpdateSMConext Response) message to the AMF. The session management context update response message is used to respond to the session management context update request message in step 203.

The SMF determines, based on the operation type and the identifier of the activated PDU session that are in the session management context update request message, that the UE requests to establish the user-plane resources for the PDU session whose PDU session ID = 5. The SMF sends the session management context update response message to the AMF. The session management context update response message includes, for example, one or more of the following: user plane context status information (UpCnxState) or session management information (for example, N2 SM information). The user plane context status information (upConxState) indicates that the user-plane resources for the PDU session whose PDU session ID = 5 are being activated (activating). The session management information includes a related parameter for establishing the user-plane resources for the PDU session whose PDU session ID = 5. For example, the related parameter for establishing the user-plane resources herein may include but is not limited to, for example, one or more of the following: a PDU session ID (for example, PDU session ID = 5), a QoS flow identifier, and a QoS configuration.

Step 207: The AMF sends an N2 request (N2 request) message to the RAN. The N2 request message includes a service accept (service accept) message and the session management information in step 206.

The AMF determines the service accept message based on the session management context update response message in step 206. For example, the service accept message includes a PDU session activation result (PDU session reactivation result), and the PDU session activation result indicates that the user-plane resources for the PDU session are successfully established. For example, if a bit position corresponding to PDU session ID = 5 is 0, it indicates that the user-plane resources for the PDU session whose PDU session ID = 5 are successfully established. The service accept message is used to respond to the service request message in step 201.

Step 208: The RAN sends an RRC connection reconfiguration (RRC connection reconfiguration) message to the UE.

The RAN determines DRB configuration information based on the session management information in the N2 request message. The DRB configuration information includes a PDU session ID (for example, PDU session ID = 5).

The RRC connection reconfiguration message includes the service accept message in step 207 and the DRB configuration information.

Step 209: The UE sends an RRC connection reconfiguration complete (RRC connection reconfiguration complete) message to the RAN.

The RRC connection reconfiguration complete message is used to respond to the RRC connection reconfiguration message in step 208.

Step 210: The RAN sends an N2 request acknowledgment (N2 request ACK) message to the AMF.

The N2 request acknowledgment message includes session management information, and the session management information includes a list of successfully established user-plane resources for the PDU session. In this case, the list of successfully established user-plane resources for the PDU session indicates that the user-plane resources for the PDU session whose PDU session ID = 5 are successfully established.

Step 211: The AMF sends a session management context update request message to the SMF.

The session management context update request message includes the session management information in step 210.

Step 212: The SMF sends a session management context update response message to the AMF.

The session management context update response message is used to respond to the session management context update request message in step 211.

The SMF determines, based on the session management information in the session management context update request message, that the user-plane resources for the PDU session whose PDU session ID = 5 are successfully established.

It may be understood that, if the UE is in an idle mode, the UE needs to first enter a connected mode from the idle mode, and then perform the foregoing procedure.

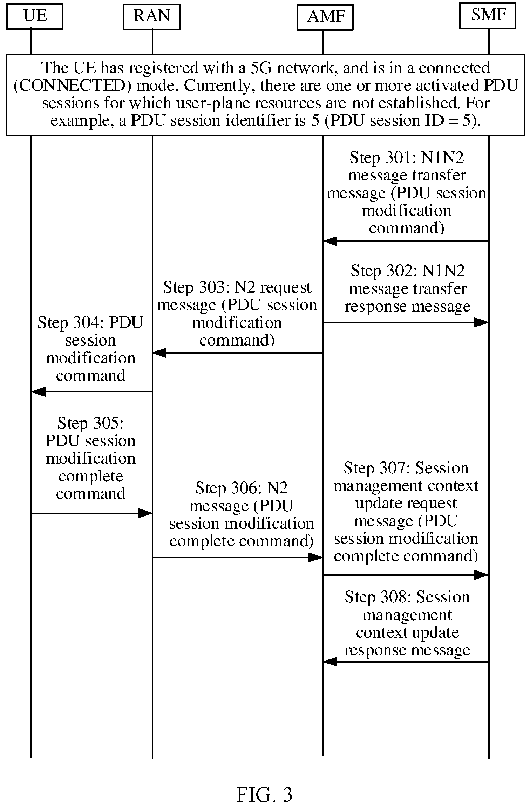

The following describes a procedure that is initiated by a network side device and that is of modifying a PDU session. It should be noted that a procedure shown in FIG. 3 is a non-collision scenario. For example, UE has registered with a 5G network, and the UE is in a connected mode. Currently, there is a context of an activated PDU session. For example, an identifier of the PDU session is PDU Session ID = 5. The following uses an example in which the identifier of the PDU session is PDU session ID = 5 to describe the procedure that is initiated by the network side device for the PDU session and that is of modifying the PDU session, as shown in FIG. 3.

Step 301: An SMF sends an N1N2 message transfer (Namf_Communication_N1N2MessageTransfer) message to an AMF.

For example, when determining to start a procedure of modifying a PDU session (PDU session modification), the SMF sends the N1N2 message transfer message to the AMF.

The N1N2 message transfer message includes, for example, one or more of the following: an identifier of LTE, a PDU session ID (for example, PDU session ID = 5), or a session management container (for example, an N1 SM container). The session management container includes a PDU session modification command (PDU session modification command), and the PDU session modification command includes a PDU session ID (for example, PDU session ID = 5). It is assumed herein that the N1N2 transfer message does not include session management information (N2 SM information). An N1 interface is an interface between the UE and the AMF, that is, a non-access stratum (non-access stratum, NAS) interface. An N2 interface is an interface between a RAN and the AMF. The PDU session modification command is a message sent to the UE, and the session management information is a message sent to the RAN.

Step 302: The AMF sends an N1N2 message transfer response message to the SMF in response to the N1N2 message transfer message.

Step 303: The AMF sends an N2 request message to the RAN, where the N2 request message includes a downlink non-access stratum transport (downlink non-access stratum transport, DL NAS TRANSPORT) message, and the downlink non-access stratum transport message includes the session management container (N1 SM container) in step 301.

Step 304: The RAN sends the downlink non-access stratum transport message to the UE.

Step 305: The LTE sends a PDU session modification complete (PDU Session Modification complete) command to the RAN.

Step 306: The RAN sends an N2 message to the AMF, where the N2 message includes the PDU session modification complete command in step 305.

Step 307: The AMF sends a session management context update request message to the SMF, where the session management context update request message includes the PDU session modification complete command.

Step 308: The SMF sends a session management context update response message to the AMF, where the session management context update response message is used to respond to the session management context update request message.

Similarly, the PDU session modification command in the foregoing procedure may be alternatively replaced with a PDU session release command (PDU session release command), and the PDU session modification complete command may be alternatively replaced with a PDU session release complete (PDU session release complete) command.

The following describes a specific scenario in which operations initiated by UE and a network side device for a same PDU session collide.

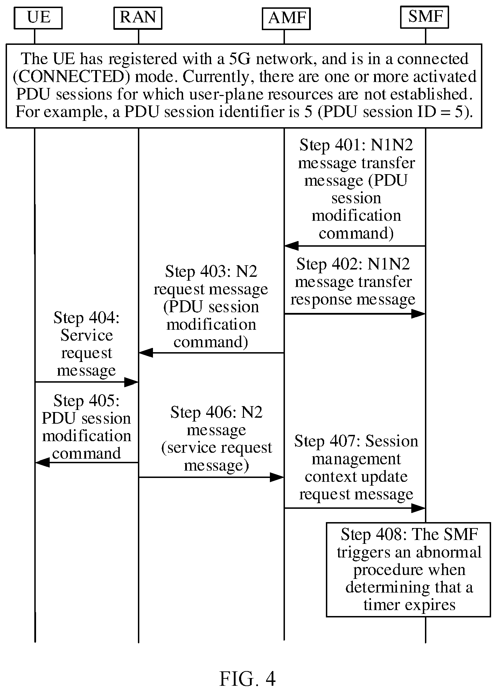

The UE has registered with a 5G network, and the UE is in a connected mode. Currently, there is a context of an activated PDU session. For example, an identifier of the PDU session is PDU Session ID = 5. The following uses an example in which the identifier of the PDU session is PDU session ID = 5 to describe a scenario in which a procedure that is initiated by the network side device for the PDU session and that is of modifying the PDU session is collided with a procedure that is initiated by the UE and that is of establishing user-plane resources for the PDU session and a collision processing process, as shown in FIG. 4.

Step 401: An SMF sends an N1N2 message transfer message to an AMF.

For example, when determining to start a procedure of modifying a PDU session (PDU session modification), the SMF sends the N1N2 message transfer message to the AMF.

The N1N2 message transfer message may include, for example, one or more of the following: an identifier of the LTE, a PDU session ID (for example, PDU session ID = 5), or a session management container (N1 SM container). The session management container includes a PDU session modification command, and the PDU session modification command includes a PDU session ID (for example, PDU session ID = 5). It is assumed herein that the N1N2 transfer message does not include session management information (N2 SM information).

Step 402: The AMF sends an N1N2 message transfer response message to the SMF in response to the N1N2 message transfer message.

Step 403: The AMF sends an N2 request message to a RAN, where the N2 request message includes a downlink non-access stratum transport message, and the downlink non-access stratum transport message includes the session management container (N1 SM container) in step 401.

Step 404: The UE sends a service request message to the RAN. The service request message includes uplink data status information, and the uplink data status information indicates a PDU session ID (for example, PDU session ID = 5). If the uplink data status information indicates that PDU session ID = 5, it indicates that the LTE requests to establish user-plane resources for a PDU session whose PDU session ID = 5.

Step 405: The RAN sends the downlink non-access stratum transport message to the UE.

Step 406: The RAN sends an N2 message to the AMF. The N2 message includes the service request message in step 404.

Step 407: The AMF sends a session management context update request message to the SMF.

The AMF determines, based on the service request message in step 406, that the UE requests to establish the user-plane resources for the PDU session whose PDU session ID = 5. The session management context update request message includes, for example, one or more of the following: an operation type (operation type) or an identifier of an activated PDU session (for example, PDU session ID = 5), and the operation type indicates user-plane activation.

Step 408: The SMF triggers an abnormal procedure when determining that a timer expires.

The SMF determines, based on the session management context update request message in step 407, that the LTE requests to establish the user-plane resources for the PDU session whose PDU session ID = 5. Because the SMF is performing the procedure of modifying the PDU session whose PDU session ID = 5, the SMF does not respond to the session management context update request message in step 407. It may be understood that because the collision scenario is not described in a protocol, the SMF generally processes a collision scenario explicitly described in the protocol, and does not process the collision scenario that is not described. When receiving a response message (namely, a PDU session modification complete (namely, PDU Session Modification complete) message) from the UE for the PDU session modification command, the SMF responds to the session management context update request message in step 407. However, if the SMF receives no PDU session modification complete command, the SMF does not respond to the session management context update request message in step 407. The SMF waits for the PDU session modification complete command until a first timer expires. The SMF retransmits the PDU session modification complete message, and restarts the first timer. When the first timer expires for a K^{th} time, the SMF aborts the procedure of modifying the PDU session whose PDU session ID = 5. K is a preset value. The first timer includes a timer that waits for the PDU session modification complete command.

Similarly, the UE determines, based on the PDU session modification command in step 405, that the SMF requests to modify the PDU session whose PDU session ID = 5. Because the UE is performing the procedure of requesting to establish the user-plane resources for the PDU session whose PDU session ID = 5, the LTE does not respond to the PDU session modification command, and the LTE suspends (suspend) transmission of the PDU session modification command. The UE responds to the PDU session modification command in step 405 only after receiving a response message (namely, a service accept message) from the AMF for the service request message. However, if the UE receives no service accept message, the LTE does not respond to the PDU session modification command in step 405, and the UE waits for the service accept message until a second timer expires. If the LTE in a connected mode initiates the procedure of requesting to establish the user-plane resources for the PDU session whose PDU session ID = 5, the UE aborts the procedure, and returns to the connected mode. If the UE in an idle mode initiates the procedure of requesting to establish the user-plane resources for the PDU session whose PDU session ID = 5, the UE aborts the procedure, releases any resource related to the procedure, and enters the idle mode. The second timer herein includes a timer that waits for the service accept message.

Therefore, the UE and the SMF each wait for a response message for a request operation initiated by itself. Consequently, their respective timers expire, and the abnormal procedure is triggered.

In addition, a similar case may also occur in a scenario in which a procedure that is initiated by a network and that is of releasing a PDU session is collided with a procedure that is initiated by UE and that is of establishing user-plane resources. For example, when the UE is in a connected mode, the PDU session modification command may be alternatively replaced with a PDU session release command. Alternatively, when the UE is in an idle mode, a similar case may also occur in a scenario in which a procedure that is initiated by a network and that is of modifying (releasing) a PDU session is collided with a procedure that is initiated by LTE and that is of establishing user-plane resources.

Based on the collision scenario shown in FIG. 4, the following collision may occur in a network-requested PDU session modification procedure.
1. The UE initiates a service request procedure, where the service request procedure includes uplink data status information, and the uplink data status information is used to activate user-plane resources for a PDU session #1. In addition, the SMF initiates the network-requested PDU session modification procedure, where the PDU session modification procedure is used to modify the PDU session #1.
2. According to existing processing logic, during 5GMM procedures, the UE and the AMF suspend transmission of 5GSM messages. Therefore, the PDU session modification command may be suspended at the AMF or the UE.
3. After the SMF sends the PDU session modification command, the SMF receives a session management context update request message (for example, Nsmf_PDUSession_UpdateSMConext Request) from the AMF. The message is used to activate user-plane resources for the session that is requested to be modified.

In the foregoing collision cases, it is unclear for the SMF on how to process the collision.

Two sub-cases need to be considered:
Sub-case 1: The network-requested PDU session modification is to modify both parameters at the LTE NAS and the NG-RAN node (such as QoS profiles) for the PDU session.
Sub-case 2: The network-requested PDU session modification is to modify parameters at the UE NAS only (for example, serving PLMN rate control) for the PDU session.

In the foregoing two sub-cases, to make SMF processing simpler and avoid possible unnecessarily 5GSM retries (for example, some abnormal cases occur during an ongoing service request procedure, which delays competition of the service request procedure), the SMF may abort the ongoing network-requested PDU session modification procedure and only perform the user-plane resources setup for the PDU session. For the foregoing sub-case 1, the parameters at the NG-RAN node can be updated during the user-plane resources setup procedure triggered by the service request procedure. After the user-plane resources for the PDU session are completely established, the SMF can further re-initiate the network-requested PDU session modification procedure of the PDU session.

Similarly, the following collision scenarios may occur in the network-requested PDU session release procedure.
1. The UE initiates a service request procedure, where the service request procedure includes uplink data status information, and the uplink data status information is used to activate user-plane resources for a PDU session #1. In addition, the SMF initiates a network-requested PDU session release procedure, where the PDU session release procedure is used to release the PDU session #1.
2. As per specified in subclause 4.2, during 5GMM procedures, the UE and the AMF suspend transmission of 5GSM messages. Therefore, the PDU session release command may be suspended at the AMF or the UE.
3. After the SMF sends the PDU session release command, the SMF receives a session management context update request message from the AMF. The message is used to activate user-plane resources that are requested to be released.

In the research process, the inventor finds the foregoing collision scenario, and finds that it is unclear for the SMF on how to process the collision scenario in the foregoing collision cases.

Because the PDU session is to be released, it does not make any sense to establish the user-plane resources for the PDU session in this case. Therefore, the SMF may not establish the user-plane resources for the PDU session, but continue to perform the network-requested PDU session release procedure of the session.

In conclusion, when the user-plane resources establishment procedure is collided with the network-requested PDU session modification (or release) procedure of the same PDU session, this is unspecified currently, which makes implementation behavior of the SMF unclear.

Based on the foregoing two types of collision scenarios, this application provides the following solutions:
1. When the user-plane resources establishment procedure is collided with the network-requested PDU session modification procedure of the same PDU session, the SMF aborts the ongoing network-requested PDU session modification procedure, and continues to only perform user-plane resources setup procedure of the PDU session.
2. When the user-plane resources establishment procedure is collided with the network-requested PDU session modification procedure of the same PDU session, the SMF does not establish the user-plane resources for the PDU session, and continues to perform the network-requested PDU session release procedure of the PDU session.

In some embodiments, a session management function network element initiates a procedure of a first operation for a first session. The session management function network element receives, from an access and mobility management function network element, a request to establish user-plane resources for the first session in a process of performing the first operation, for example, when a procedure of establishing user-plane resources is collided with a procedure that is initiated by a network and that is of modifying (releasing) a PDU session for a same PDU session. The session management function network element may determine a subsequent procedure based on a type of the first operation.

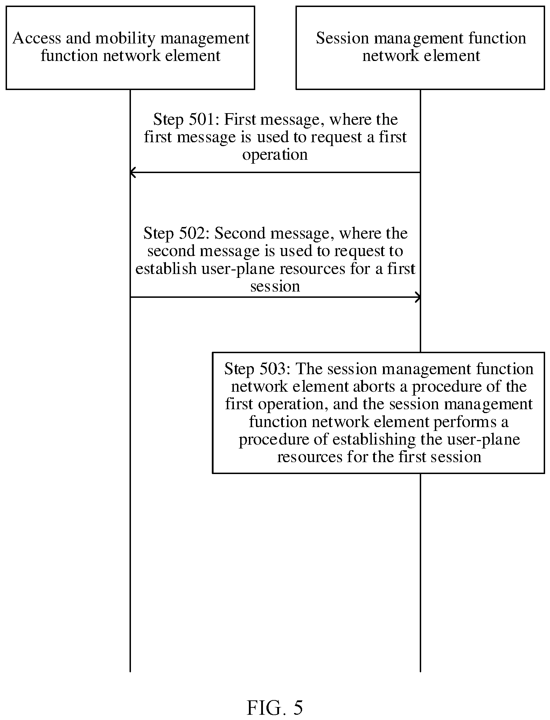

For example, when the first operation is modifying the first session (namely, a procedure that is initiated by a network side device and that is of modifying the first session), the session management function network element aborts the procedure of modifying the first session, and performs the procedure of establishing user-plane resources for the first session. For example, for details, refer to related content of embodiments shown in FIG. 5 and other accompanying drawings.

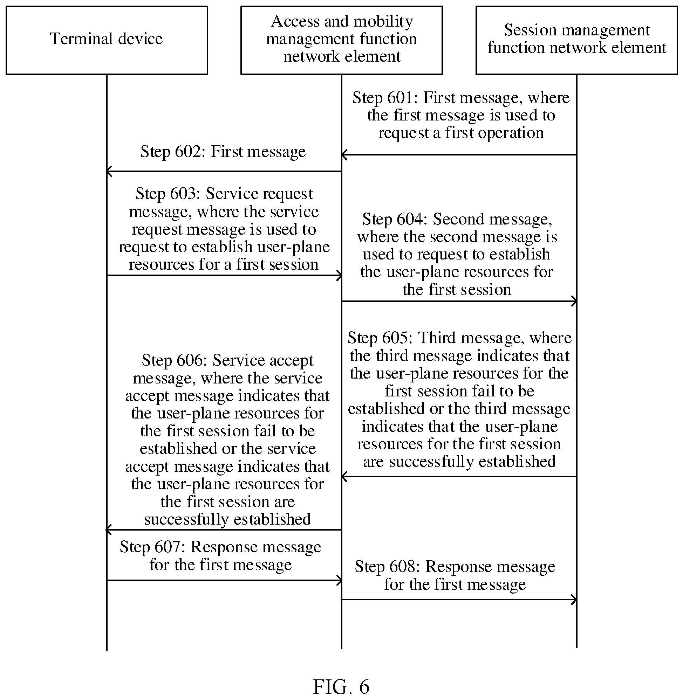

When the first operation is releasing the first session (namely, a procedure that is initiated by a network and that is of releasing the first session), the session management function network element rejects the request to establish the user-plane resources for the first session, and continues to perform the procedure of releasing the first session. For example, for details, refer to related content of embodiments shown in FIG. 6 and other accompanying drawings.

Based on the foregoing collision scenario, an embodiment of this application provides a communication method. When determining that a procedure of a first operation (for example, a procedure of modifying a PDU session) is collided with a procedure that is initiated by a terminal device and that is of establishing user-plane resources for a PDU session, the session management function network element aborts (abort) the current procedure of the first operation, and performs the procedure of establishing the user-plane resources. The following uses the embodiment shown in FIG. 5 as an example for description.

Step 501: A session management function network element sends a first message to an access and mobility management function network element, where the first message is used to request a first operation, and the first operation includes modifying a first session or releasing a first session.

For example, if the first operation is modifying the first session, the first message is a PDU session modification command, and the PDU session modification command includes an identifier of the first session; or if the first operation is releasing the first session, the first message is a PDU session release command, and the PDU session release command includes an identifier of the first session.

For example, the session management function network element sends an N1N2 message transfer message to the access and mobility management function network element, where the N1N2 message transfer message includes a session management container, the session management container includes the first message, and the first message includes the identifier of the first session. The access and mobility management function network element sends a downlink non-access stratum transport message to the terminal device by using a radio access device, where the downlink non-access stratum transport message includes the session management container.

For details, refer to step 301 to step 304 shown in FIG. 3.

Step 502: The access and mobility management function network element sends a second message to the session management function network element, where the second message is used to request to establish user-plane resources for the first session.

It can be learned from step 201 to step 203 in the procedure shown in FIG. 2 that before the access and mobility management function network element sends the second message to the session management function network element, the terminal device sends the service request message to the radio access device. The service request message includes uplink data status information, and the uplink data status information indicates the identifier of the first session. The radio access device sends an N2 message to the access and mobility management function network element. The N2 message includes the service request message. The access and mobility management function network element determines the second message based on the service request message. For example, the second message is a session management context update request message, the session management context update request message includes, for example, one or more of the following: an operation type or an identifier of an activated session, the operation type indicates user-plane activation, and the identifier of the activated session includes the identifier of the first session.

Step 503: The session management function network element aborts a procedure of the first operation, and the session management function network element performs a procedure of establishing the user-plane resources for the first session when the session management function network element determines that no response message for the first message is received and the second message is received.

When the session management function network element receives the second message, the session management function network element determines whether the response message for the first message is received. If the session management function network element receives the response message for the first message, the session management function network element performs the procedure of establishing the user-plane resources for the first session. Refer to the procedure shown in FIG. 2. If the session management function network element receives no response message for the first message and receives the second message, that is, the first operation is collided with establishment of the user-plane resources for the first session, the session management function network element may first abort the procedure of the first operation, and the session management function network element performs the procedure of establishing the user-plane resources for the first session.

If the first operation is modifying the first session, the response message for the first message includes a PDU session modification complete command, and the PDU session modification complete command includes an identifier of the first session; or if the first operation is releasing the first session, the response message for the first message includes a PDU session release complete command, and the PDU session release complete command includes an identifier of the first session.

That the session management function network element aborts the procedure of the first operation may include: The session management function network element does not wait for the response message for the first message. For example, the session management function network element stops a first timer, and the first timer includes a timer that waits for the response message for the first message. For example, it is assumed that the first operation is modifying the first session, the SMF aborts the procedure of the first operation, and the SMF does not wait for the PDU session modification complete command.

For example, the procedure in which the session management function network element establishes the user-plane resources for the first session may include but is not limited to one or more of the following steps:
The session management function network element sends a session modification request message to a user plane function network element, where the session modification request message is used to configure downlink tunnel information for the user plane function network element; and the session management function network element receives a session modification response message from the user plane function network element, where the session modification response message is used to respond to the session modification request message; and the session management function network element sends a third message to the access and mobility management function network element in response to the second message, where the third message indicates that the user-plane resources for the first session are successfully established. The third message is a session management context update response message, the session management context update response message includes, for example, one or more of the following: user plane context status information or session management information, the user plane context status information indicates that the user-plane resources for the first session are being activated, and the session management information includes a related parameter for establishing the user-plane resources for the first session. For example, with reference to FIG. 2, the session management function network element performs the procedure of establishing the user-plane resources for the first session, as shown in step 204 to step 206.

In addition, in some embodiments, if the first operation is modifying the first session, when the session management function network element determines that no response message for the first message is received, the second message is received, and no user-plane resources for the first session are requested to be established, the session management function network element aborts the procedure of the first operation, and the session management function network element performs the procedure of establishing the user-plane resources for the first session. For example, the session management function network element sends an N1N2 message transfer message to the access and mobility management function network element, where the N1N2 message transfer message includes a session management container, the session management container includes a PDU session modification command, and the N1N2 message transfer message does not include session management information.

Further, in some embodiments, after the session management function network element performs the procedure of establishing the user-plane resources for the first session, the session management function network element may resend the first message to the terminal device, that is, re-initiate the procedure of requesting the first operation. For example, the SMF re-initiates the procedure of requesting to modify the first session. For details, refer to the procedure shown in FIG. 3.

In addition, in some embodiments, the session management function network element sends first indication information to the access and mobility management function network element, where the first indication information indicates the first operation. For example, the session management function network element sends an N1N2 message transfer message to the access and mobility management function network element. The N1N2 message transfer message includes, for example, one or more of the following: an identifier of the terminal device, an identifier of the first session, a session management container, or first indication information. The session management container includes a PDU session modification command, and the PDU session modification command includes the identifier of the first session. The access and mobility management function network element sends an N2 request message to the radio access device, where the N2 request message includes a downlink non-access stratum transport message, and the downlink non-access stratum transport message includes, for example, one or more of the following: a session management container or first indication information. The radio access device sends a downlink non-access stratum transport message to the terminal device. When the terminal device determines to send the service request message to the access and mobility management function network element, and receives no response message (namely, a service accept message) for the service request message, when the first indication information indicates that the first operation is modifying the first session, the terminal device may discard the first message based on the first indication information. Similarly, when the first indication information indicates that the first operation is releasing the first session, the terminal device may discard the first message based on the first indication information.

According to the method provided in the embodiment shown in FIG. 5, when the session management function network element determines that the procedure of modifying (or releasing) the PDU session is collided with the procedure that is initiated by the terminal device and that is of establishing the user-plane resources for the PDU session, that is, an operation initiated by a network side device is collided with an operation initiated by the terminal device for a same PDU session, the session management function network element aborts the current procedure of modifying (or releasing) the PDU session, and responds to the procedure of establishing the user-plane resources for the first session. In this way, a case in which the terminal device and the session management function network element each wait for a response message for a request operation initiated by itself, which causes expiring of their respective timers can be avoided, thereby effectively ensuring user experience and smoothness of a service process.

Based on the foregoing collision scenario, an embodiment of this application provides a communication method.

When a session management function network element determines that a procedure of a first operation (for example, a procedure of releasing a PDU session) is collided with a procedure that is initiated by a terminal device and that is of establishing user-plane resources for a PDU session, the session management function network element responds to the procedure of establishing the user-plane resources, and sends a third message to an access and mobility management function network element, where the third message indicates that the user-plane resources for the first session fail to be established (that is, reject to establish the user-plane resources). In this case, the session management function network element rejects a request to establish the user-plane resources for the first session, and continues to perform the procedure of releasing the first session.

When a session management function network element determines that a procedure of a first operation (for example, a procedure of modifying a PDU session) is collided with a procedure that is initiated by a terminal device and that is of establishing user-plane resources for a PDU session, the session management function network element responds to the procedure of establishing the user-plane resources, and sends a third message to an access and mobility management function network element, where the third message indicates that the user-plane resources for the first session are successfully established (that is, establish the user-plane resources). In this case, the session management function network element continues to perform the procedure of request to establish the user-plane resources for the first session and a procedure of releasing the first session.

The following uses the embodiment shown in FIG. 6 as an example for description.

Step 601: A session management function network element sends a first message to an access and mobility management function network element, where the first message is used to request a first operation, and the first operation includes modifying a first session or releasing a first session.

For example, if the first operation is modifying the first session, the first message is a PDU session modification command, and the PDU session modification command includes an identifier of the first session; or if the first operation is releasing the first session, the first message is a PDU session release command, and the PDU session release command includes an identifier of the first session.

For example, the session management function network element sends an N1N2 message transfer message to the access and mobility management function network element, where the N1N2 message transfer message includes a session management container, the session management container includes the first message, and the first message includes the identifier of the first session.

Step 602: The access and mobility management function network element sends a/the first message to a terminal device.

For example, the access and mobility management function network element sends a downlink non-access stratum transport message to the terminal device by using a radio access device, where the downlink non-access stratum transport message includes the session management container.

It should be noted that the "first message" in step 601 and the "first message" in step 602 may be the same, or may be different. For step 601 and step 602, refer to step 301 to step 304 shown in FIG. 3.

Step 603: The terminal device sends a service request message to the access and mobility management function network element, where the service request message is used to request to establish user-plane resources for the first session.

The service request message includes uplink data status information, and the uplink data status information indicates the identifier of the first session.

For example, the terminal device sends the service request message to the radio access device. The radio access device sends an N2 message to the access and mobility management function network element, where the N2 message includes the service request message. For details, refer to step 201 and step 202 shown in FIG. 2.

Step 604: The access and mobility management function network element sends a second message to the session management function network element based on the service request message, where the second message is used to request to establish the user-plane resources for the first session.

For example, the access and mobility management function network element determines the second message based on the service request message in step 603. The second message is a session management context update request message, the session management context update request message includes, for example, one or more of the following: an operation type or an identifier of an activated session, the operation type indicates user-plane activation, and the identifier of the activated session includes the identifier of the first session. For details, refer to step 3 shown in FIG. 2.

Step 605: The session management function network element sends a third message to the access and mobility management function network element in response to the second message when the session management function network element determines that no response message for the first message is received and the second message is received, where the third message indicates that the user-plane resources for the first session fail to be established or the third message indicates that the user-plane resources for the first session are successfully established.

In some embodiments, when the third message indicates that the user-plane resources for the first session are successfully established, the third message is a session management context update response message, the session management context update response message includes, for example, one or more of the following: user plane context status information or session management information, and the user plane context status information indicates that the user-plane resources for the first session are being activated. The session management information includes a related parameter for establishing the user-plane resources for the first session. For example, the related parameter for establishing the user-plane resources herein may include but is not limited to, for example, one or more of the following: a PDU session ID (for example, PDU session ID = 5), a QoS flow identifier, and a QoS configuration.

For example, when the session management function network element determines that, for a same PDU session, a procedure of modifying the PDU session is collided with a procedure that is initiated by the terminal device and that is of establishing user-plane resources for the PDU session, the session management function network element sends a third message to the access and mobility management function network element, where the third message indicates that the user-plane resources for the first session are successfully established.

In some other embodiments, when the third message indicates that the user-plane resources for the first session fail to be established, the third message is a session management context update response message, the session management context update response message includes user plane context status information, and the user plane context status information indicates that the user-plane resources for the first session are deactivated. In addition, the third message may further include a first cause value, and the first cause value indicates a cause why the user-plane resources for the first session fail to be established. For example, the first cause value indicates that the first session is performing a procedure of the first operation.

For example, when the session management function network element determines that, for a same PDU session, a procedure of releasing the PDU session is collided with a procedure that is initiated by the terminal device and that is of establishing user-plane resources for the PDU session, the session management function network element sends a third message to the access and mobility management function network element, where the third message indicates that the user-plane resources for the first session fail to be established.

In addition, in some embodiments, if the first operation is modifying the first session, when the session management function network element determines that no response message for the first message is received, the second message is received, and no user-plane resources for the first session are requested to be established for the first session, the session management function network element sends the third message to the access and mobility management function network element in response to the second message. For example, the session management function network element sends an N1N2 message transfer message to the access and mobility management function network element, where the N1N2 message transfer message includes a session management container, the session management container includes a PDU session modification command, and the N1N2 message transfer message does not include session management information.

Step 606: The access and mobility management function network element sends a service accept message to the terminal device based on the third message.

In some embodiments, the third message is a session management context update response message, the session management context update response message includes, for example, one or more of the following: user plane context status information or session management information, and the user plane context status information indicates that the user-plane resources for the first session are being activated. The access and mobility management function network element determines a service accept message based on the third message, where the service accept message includes an information element indicating a PDU session activation result, and the information element indicating the PDU session activation result indicates that the user-plane resources for the first session are successfully established.

For example, the access and mobility management function network element further sends an N2 request message to the radio access device. The N2 request message includes, for example, one or more of the following: the service accept message or the session management information in the session management context update response message. The radio access device sends the service accept message to the terminal device, and the radio access device interacts with the terminal device based on the session management information to complete RRC connection reconfiguration. For details, refer to step 207 to step 212 in the embodiment shown in FIG. 2.

In some embodiments, the third message is a session management context update response message, the session management context update response message includes user plane context status information, and the user plane context status information indicates that the user-plane resources for the first session are deactivated. The access and mobility management function network element determines a service accept message based on the third message, where the service accept message includes an information element indicating a PDU session activation result, and the information element indicating the PDU session activation result indicates that the user-plane resources for the first session fail to be established.

In some embodiments, the third message is a session management context update response message, the session management context update response message includes user plane context status information and a first cause value, the user plane context status information indicates that the user-plane resources for the first session are deactivated, and the first cause value indicates a cause why the user-plane resources for the first session fail to be established. The access and mobility management function network element determines a service accept message based on the third message, where the service accept message includes an information element indicating a PDU session activation result and an information element indicating an error cause of the PDU session activation result, the information element indicating the PDU session activation result indicates that the user-plane resources for the first session fail to be established, and the information element indicating the error cause of the PDU session activation result indicates a cause why the user-plane resources for the first session fail to be established. For example, the reason why the user-plane resources for the first session fail to be established indicates that the first session is performing a procedure of the first operation.

Step 607: The terminal device sends the response message for the first message to the access and mobility management function network element.

The terminal device may cache the first message or the response message for the first message, and after receiving the service accept message in step 606, send the response message for the first message to the access and mobility management function network element.

A mobility management layer in the terminal device receives the first message from the access and mobility management function network element.

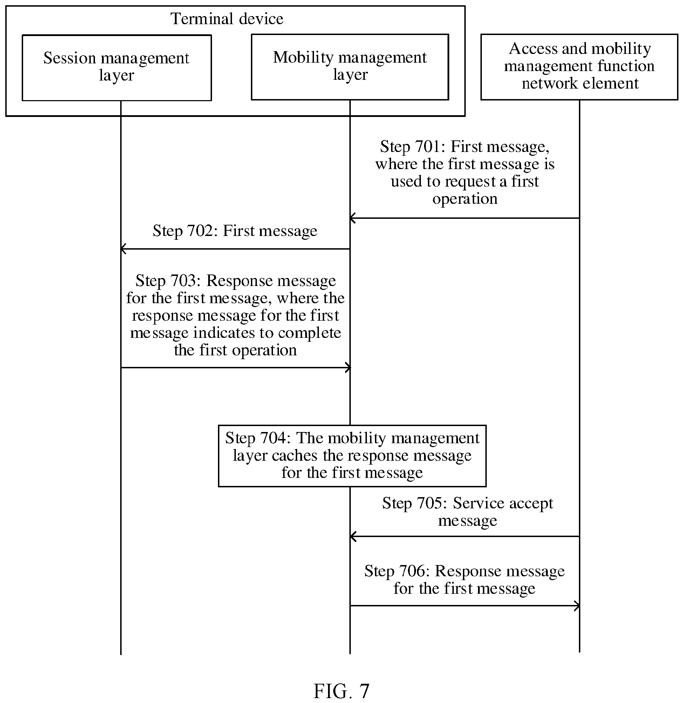

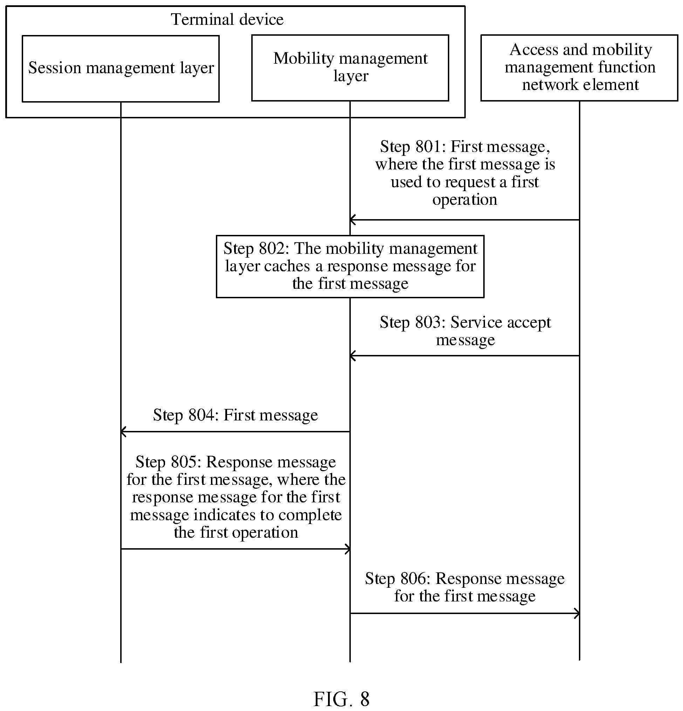

After the mobility management layer receives the first message from the access and mobility management function network element, because the procedure that is initiated by the terminal device and that is of requesting to establish the user-plane resources for the first session is collided with the procedure that is initiated by the session management function network element and that is of requesting the first operation, in this scenario, the terminal device may send the response message for the first message to the session management function network element by using but not limited to the following solution 1 (as shown in FIG. 7) and solution 2 (as shown in FIG. 8).

### Solution 1:

Step 701: A mobility management layer receives a first message from an access and mobility management function network element. (This step may correspond to step 602).

Step 702: The mobility management layer sends a/the first message to a session management layer.

For example, the session management function network element further sends first indication information to the access and mobility management function network element, where the first indication information indicates a first operation. Specifically, the session management function network element sends an N1N2 message transfer message to the access and mobility management function network element. The N1N2 message transfer message includes, for example, one or more of the following: an identifier of a terminal device, an identifier of a first session, a session management container, or first indication information. The session management container includes a PDU session release command (or a PDU session modification command), and the PDU session release command includes the identifier of the first session. The access and mobility management function network element sends an N2 request message to the radio access device, where the N2 request message includes a downlink non-access stratum transport message, and the downlink non-access stratum transport message includes the session management container and the first indication information. The radio access device sends the downlink non-access stratum transport message to the terminal device. When the first indication information indicates that the first operation is releasing the first session (or modifying the first session), the mobility management layer sends the first message to the session management layer based on the first indication information.

It should be noted that the "first message" in step 701 and the "first message" in step 702 may be the same, or may be different. Step 703: The session management layer sends a response message for the first message to the mobility management layer.

For example, the response message for the first message may indicate to complete the first operation.

Step 704: The mobility management layer caches the response message for the first message.

Step 705: The access and mobility management function network element sends the service accept message in step 606 to the mobility management layer.

Step 706: The mobility management layer sends the response message for the first message to the access and mobility management function network element (that is, step 607).

Refer to FIG. 7. According to the foregoing solution 1, when the procedure of modifying (or releasing) the PDU session is collided with the procedure that is initiated by the terminal device and that is of establishing the user-plane resources for the PDU session, the mobility management layer sends the first message to the session management layer, and caches the response message for the first message from the session management layer until receiving the service accept message in step 606. The mobility management layer sends the cached response message for the first message to the access and mobility management function network element, thereby effectively ensuring user experience and smoothness of a service process.

### Solution 2:

Step 801: A mobility management layer receives a first message from a session management function network element. (This step may correspond to step 602).

Step 802: The mobility management layer caches a first message.

For example, the session management function network element further sends first indication information to an access and mobility management function network element, where the first indication information indicates a first operation. Specifically, the session management function network element sends an N1N2 message transfer message to the access and mobility management function network element. The N1N2 message transfer message includes, for example, one or more of the following: an identifier of a terminal device, an identifier of a first session, a session management container, or first indication information. The session management container includes a PDU session release command (or a PDU session modification command), and the PDU session release command includes the identifier of the first session. The access and mobility management function network element sends an N2 request message to the radio access device, where the N2 request message includes a downlink non-access stratum transport message, and the downlink non-access stratum transport message includes the session management container and the first indication information. The radio access device sends the downlink non-access stratum transport message to the terminal device. When the first indication information indicates that the first operation is releasing the first session (or modifying the first session), the mobility management layer caches the first message based on the first indication information.

Step 803: The access and mobility management function network element sends the service accept message in step 606 to the mobility management layer.

Step 804: The mobility management layer sends a/the first message to a session management layer.

It should be noted that the "first message" in step 801 and the "first message" in step 804 may be the same, or may be different.

Step 805: The session management layer sends a response message for the first message to the mobility management layer.

Step 806: The mobility management layer sends the response message for the first message to the access and mobility management function network element (that is, step 607).

Refer to FIG. 8. According to the foregoing solution 2, when the procedure of modifying (or releasing) the PDU session is collided with the procedure that is initiated by the terminal device and that is of establishing the user-plane resources for the PDU session, the mobility management layer caches the first message until receiving the service accept message in step 606. The mobility management layer sends the first message to the session management layer, and receives the response message for the first message from the mobility management layer. The mobility management layer sends the response message for the first message to the access and mobility management function network element, thereby effectively ensuring user experience and smoothness of a service process. Comparing the solution 2 and the foregoing solution 1, the message cached in the solution 1 is the response message for the first message, and the message cached in the solution 2 is the first message.

Step 608: The access and mobility management function network element sends the response message for the first message to the session management network element.

According to the method provided in the embodiment shown in FIG. 6, when the session management function network element determines that the procedure of modifying (or releasing) the PDU session is collided with the procedure that is initiated by the terminal device and that is of establishing the user-plane resources for the PDU session, that is, an operation initiated by a network side device is collided with an operation initiated by the terminal device for a same PDU session, the session management function network element sends the third message to the access and mobility management function network element, where the third message indicates that the user-plane resources for the first session fail to be established or the third message indicates that the user-plane resources for the first session are successfully established. In this way, a case in which the terminal device and the session management function network element each wait for a response message for a request operation initiated by itself, which causes expiring of their respective timers can be avoided, thereby effectively ensuring user experience and smoothness of a service process.

The following describes embodiments shown in FIG. 5 and FIG. 6 with reference to specific embodiments.

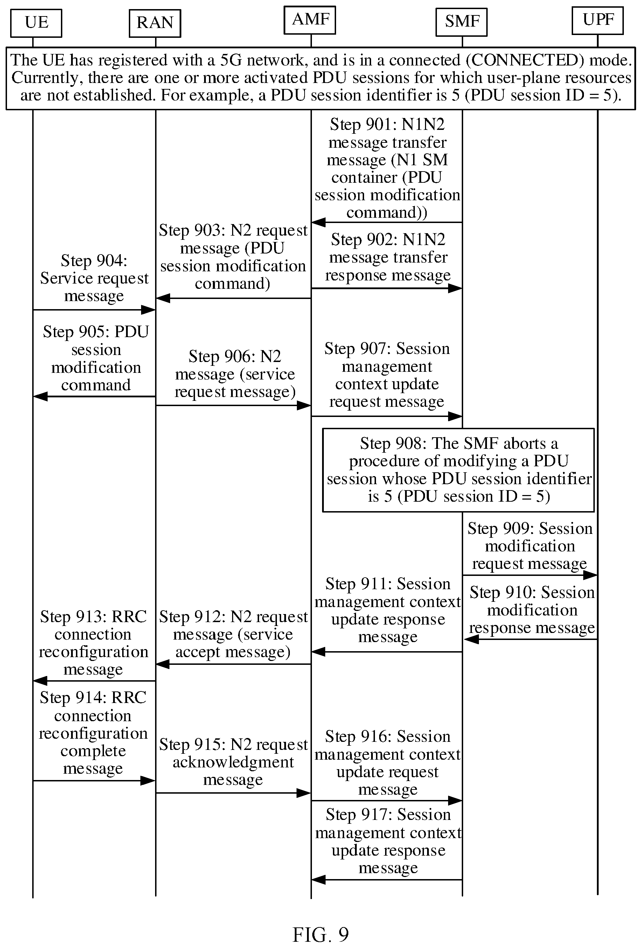

Embodiment 1: UE has registered with a 5G network, and the UE is in a connected mode. Currently, there is a context of an activated PDU session. For example, an identifier of the PDU session is PDU session ID = 5, and user-plane resources for the PDU session are not established. The following uses an example in which the identifier of the PDU session is PDU session ID = 5 to describe a scenario in which a procedure that is initiated by a network side device for the PDU session and that is of modifying the PDU session is collided with a procedure that is initiated by the UE and that is of establishing user-plane resources and a collision processing process, as shown in FIG. 9.

For step 901 to step 907, refer to step 401 to step 407 in FIG. 4. Details are not described again.

Step 908: The SMF determines, based on the operation type and the identifier of the activated PDU session that are in the session management context update request message, that the LTE requests to establish the user-plane resources for the PDU session whose PDU session ID = 5. In addition, the SMF is requesting to modify the PDU session whose PDU session ID = 5 and receives no PDU session modification complete command. The SMF aborts the procedure of modifying the PDU session whose PDU session ID = 5.

For example, the SMF stops a timer that waits for the PDU session modification complete command.

For step 909 to step 917, refer to step 204 to step 212 in FIG. 2. Details are not described again.

In some embodiments, the LTE discards the PDU session modification command.

In some embodiments, if the N1N2 message transfer message further includes first the indication information, when the AMF sends the N2 request message to the RAN, the downlink non-access stratum transport message in the N2 request message also includes the first indication information. The RAN sends the downlink non-access stratum transport message to the UE. When the UE determines that the service request message has been sent to the AMF and no response message (namely, a service accept message) for the service request message is received, if the first indication information indicates that the first operation is modifying the PDU session whose PDU session ID = 5, the UE may discard the PDU session modification command based on the first indication information.

After the procedure of establishing the user-plane resources for the PDU session whose PDU session ID = 5 is completed (that is, after step 917), the SMF may restart the procedure of modifying the PDU session whose PDU session ID = 5.

According to the foregoing method, for the PDU session whose PDU session ID = 5, when the procedure that is initiated by the network side device and that is of modifying the PDU session is collided with the procedure that is initiated by the UE and that is of establishing the user-plane resources, the SMF aborts the procedure of modifying the PDU session whose PDU session ID = 5, and performs the procedure of establishing the user-plane resources for the PDU session whose PDU session ID = 5, thereby effectively ensuring user experience and smoothness of a service process.

Similarly, the foregoing embodiment is also applicable to a scenario in which a procedure that is initiated by a network side device and that is of releasing a PDU session is collided with a procedure that is initiated by UE and that is of establishing user-plane resources and a collision processing process.

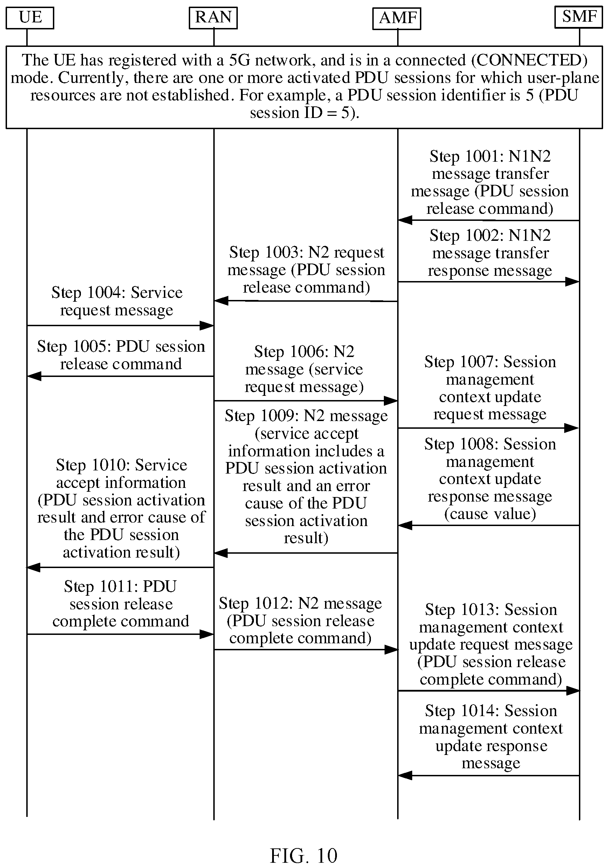

Embodiment 2: UE has registered with a 5G network, and the UE is in a connected mode. Currently, there is a context of an activated PDU session. For example, an identifier of the PDU session is PDU session ID = 5, and user-plane resources for the PDU session are not established. The following uses an example in which the identifier of the PDU session is PDU session ID = 5 to describe a scenario in which a procedure that is initiated by a network side device for the PDU session and that is of releasing the PDU session is collided with a procedure that is initiated by the UE and that is of establishing user-plane resources and a collision processing process, as shown in FIG. 10.

Step 1001: An SMF sends an N1N2 message transfer message to an AMF.

For example, when determining to start a procedure of releasing a PDU session, the SMF sends the N1N2 message transfer message to the AMF.

The N1N2 message transfer message includes, for example, one or more of the following: an identifier of LTE, a PDU session ID (for example, PDU session ID = 5), or a session management container. The session management container includes a PDU session release command, and the PDU session release command includes a PDU session ID (for example, PDU session ID = 5).

Step 1002: The AMF sends an N1N2 message transfer response message to the SMF in response to the N1N2 message transfer message.

Step 1003: The AMF sends an N2 request message to a RAN, where the N2 request message includes a downlink non-access stratum transport message, and the downlink non-access stratum transport message includes the session management container in step 1001.

Step 1004: The UE sends a service request message to the RAN. The service request message includes uplink data status information, and the uplink data status information indicates a PDU session ID (for example, PDU session ID = 5). If the uplink data status information indicates that PDU session ID = 5, it indicates that the LTE requests to establish user-plane resources for a PDU session whose PDU session ID = 5.

Step 1005: The RAN sends the downlink non-access stratum transport message to the UE.

Step 1006: The RAN sends an N2 message to the AMF. The N2 message includes the service request message in step 1004.

Step 1007: The AMF sends a session management context update request message to the SMF.

The AMF determines, based on the service request message in step 1006, that the UE requests to establish the user-plane resources for the PDU session whose PDU session ID = 5. The session management context update request message includes, for example, one or more of the following: an operation type (operation type) or an identifier of an activated PDU session (for example, PDU session ID = 5), and the operation type indicates user-plane activation.

Step 1008: The SMF determines, based on the operation type and the identifier of the activated PDU session that are in the session management context update request message, that the LTE requests to establish the user-plane resources for the PDU session whose PDU session ID = 5. In addition, the SMF is requesting to release the PDU session whose PDU session ID = 5 and receives no PDU session release complete command. The SMF sends a session management context update response message to the AMF. The session management context update response message indicates that the user-plane resources for the PDU session whose PDU session ID = 5 fail to be established. The session management context update response message includes user plane context status information, or the session management context update response message includes user plane context status information and a cause value (cause). The user plane context status information indicates that the user-plane resources for the PDU session whose PDU session ID = 5 are deactivated, and the cause value indicates that the procedure of releasing the PDU session is being performed for the PDU session whose PDU session ID = 5.

Step 1009: The AMF sends the N2 message to the RAN, where the N2 message includes a service accept message.

The AMF determines the service accept message based on the session management context update response message. The service accept message includes a PDU session activation result. Alternatively, the service accept message includes a PDU session activation result and an error cause of the PDU session activation result. The PDU session activation result indicates that the user-plane resources for the PDU session whose PDU session ID = 5 fail to be established. For example, if a bit position corresponding to PDU session ID = 5 is 1, it indicates that the user-plane resources for the PDU session whose PDU session ID = 5 fail to be established. The error cause of the PDU session activation result indicates that the procedure of releasing the PDU session whose PDU session ID = 5 is being performed. In addition, the error cause of the PDU session activation result may indicate other content. This is not limited herein.

Step 1010: The RAN sends the service accept message to the UE.

Step 1011: The UE determines, based on the service accept message in step 1009, that the user-plane resources for the PDU session whose PDU session ID = 5 fail to be established, and the UE sends the PDU session release complete command to the RAN.

Specifically, in a possible implementation, after receiving the PDU session release command, a 5GMM layer of the UE may cache the PDU session release command, and after receiving the service accept message in step 1010, the 5GMM layer sends the PDU session release command to a 5GSM layer, the 5GSM layer sends the PDU session release complete command to the 5GMM layer, and the 5GMM layer sends the PDU session release complete command to the RAN.

In a possible implementation, the N1N2 message transfer message may further include first indication information, and the first indication information indicates that the first operation is releasing the first session. When the AMF sends the N2 request message to the RAN, the downlink non-access stratum transport message in the N2 request message also includes the first indication information. The RAN sends the downlink non-access stratum transport message to the UE. After receiving the PDU session release command and the first indication information, the 5GMM layer of the LTE may cache the PDU session release command based on the first indication information, and after receiving the service accept message in step 1010, the 5GMM layer sends the PDU session release command to a 5GSM layer, the 5GSM layer sends the PDU session release complete command to the 5GMM layer, and the 5GMM layer sends the PDU session release complete command to the RAN.

In a possible implementation, after receiving the PDU session release command, the 5GMM layer of the UE may send the PDU session release command to the 5GSM layer, and the 5GSM layer sends the PDU session release complete command to the 5GMM layer. The 5GMM layer may cache the PDU session release complete command, and after receiving the service accept message in step 1010, the 5GMM layer sends the PDU session release complete command to the RAN.

In a possible implementation, the N1N2 message transfer message may further include first indication information, and the first indication information indicates that the first operation is releasing the first session. When the AMF sends the N2 request message to the RAN, the downlink non-access stratum transport message in the N2 request message also includes the first indication information. The RAN sends the downlink non-access stratum transport message to the UE. After receiving the PDU session release command and the first indication information, the 5GMM layer of the UE may send the PDU session release command to the 5GSM layer based on the first indication information, and the 5GSM layer sends the PDU session release complete command to the 5GMM layer. The 5GMM layer may cache the PDU session release complete command, and after receiving the service accept message in step 1010, the 5GMM layer sends the PDU session release complete command to the RAN.

Step 1012: The RAN sends an N2 message to the AMF, where the N2 message includes the PDU session release complete command in step 1111.

Step 1013: The AMF sends a session management context update request message to the SMF, where the session management context update request message includes the PDU session release complete command.

Step 1014: The SMF sends a session management context update response message to the AMF, where the session management context update response message is used to respond to the session management context update request message.

In the foregoing method, for the PDU session whose PDU session ID = 5, when the procedure that is initiated by the network side device and that is of releasing the PDU session is collided with the procedure that is initiated by the UE and that is of requesting the user-plane resources, the SMF sends the update context response message in response to the update context request message. The update context response message includes, for example, user plane context status information, or the update context response message includes, for example, user plane context status information and a cause value. The AMF sends the service accept message to the UE based on the update context response message, where the service accept message includes the PDU session activation result; or the service accept message includes the PDU session activation result and the error cause of the PDU session activation result. After receiving the service accept message, the LTE sends the PDU session release complete command in response to the PDU session release command.

Similarly, the foregoing embodiment is also applicable to a scenario in which a procedure that is initiated by a network side device and that is of modifying a PDU session is collided with a procedure that is initiated by UE and that is of establishing user-plane resources and a collision processing process.

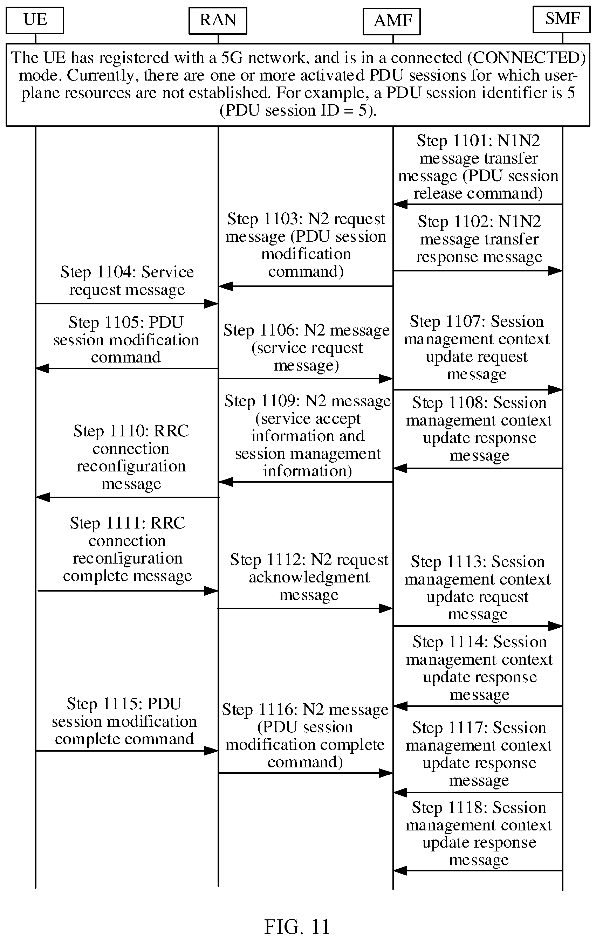

Embodiment 3: UE has registered with a 5G network, and the UE is in a connected mode. Currently, there is a context of an activated PDU session. For example, an identifier of the PDU session is PDU session ID = 5, and user-plane resources for the PDU session are not established. The following uses an example in which the identifier of the PDU session is PDU session ID = 5 to describe a scenario in which a procedure that is initiated by a network side device for the PDU session and that is of modifying the PDU session is collided with a procedure that is initiated by the UE and that is of establishing user-plane resources and a collision processing process, as shown in FIG. 11.

For step 1101 to step 1107, refer to step 401 to step 407 in FIG. 4. Details are not described again.

Step 1108: The SMF determines, based on the operation type and the identifier of the activated PDU session that are in the session management context update request message, that the LTE requests to establish the user-plane resources for the PDU session whose PDU session ID = 5. In addition, the SMF is requesting to modify the PDU session whose PDU session ID = 5 and receives no PDU session modification complete command. The SMF sends a session management context update response message to the AMF. The session management context update response message indicates that the user-plane resources for the PDU session whose PDU session ID = 5 are successfully established, and the session management context update response message includes, for example, one or more of the following: user plane context status information or session management information, where the user plane context status information indicates that the user-plane resources for the PDU session whose PDU session ID = 5 are being activated. The session management information includes a related parameter for establishing the user-plane resources for the PDU session whose PDU session ID = 5. For example, the related parameter for establishing the user-plane resources herein may include but is not limited to one or more of the following: a PDU session ID (for example, PDU session ID = 5), a QoS flow identifier, and a QoS configuration.

Step 1109: The AMF sends an N2 message to the RAN, where the N2 message includes, for example, one or more of the following: a service accept message and session management information.

The AMF determines the service accept message based on the session management context update response message. The service accept message includes a PDU session activation result. The PDU session activation result indicates that the user-plane resources for the PDU session whose PDU session ID = 5 are successfully established. For example, if a bit position corresponding to PDU session ID = 5 is 0, it indicates that the user-plane resources for the PDU session whose PDU session ID = 5 are successfully established.

Step 1110: The RAN sends an RRC connection reconfiguration message to the UE.

The RAN determines DRB configuration information based on the session management information in the N2 request message. The DRB configuration information includes a PDU session ID (for example, PDU session ID = 5).

The RRC connection reconfiguration message includes, for example, one or more of the following: the service accept message and the DRB configuration information.

For step 1111 to step 1114, refer to step 209 to step 212 in FIG. 2. Details are not described again.

The UE sends an RRC connection reconfiguration complete message to the RAN.

Step 1115: The UE determines, based on the service accept message in step 1110, that the user-plane resources for the PDU session whose PDU session ID = 5 are successfully established, and the UE sends the PDU session modification complete command to the RAN.

For step 1116 to step 1118, refer to step 306 to step 308 in FIG. 3. Details are not described again.

It may be understood that step 1111 to step 1114 are independent of step 1115 to step 1117, and are respectively corresponding to different procedures.

According to the foregoing method, for the PDU session whose PDU session ID = 5, when the procedure that is initiated by the network side device and that is of modifying the PDU session is collided with the procedure that is initiated by the UE and that is of establishing the user-plane resources, the SMF sends the update context response message in response to the update context request message. The update context response message includes, for example, one or more of the following: user plane context status information or session management information. The AMF sends the service accept message to the UE based on the update context response message, and the service accept message includes the PDU session activation result. After receiving the service accept message, the LTE sends the PDU session modification complete command in response to the PDU session modification command, and completes DRB configuration by interacting with the RAN.

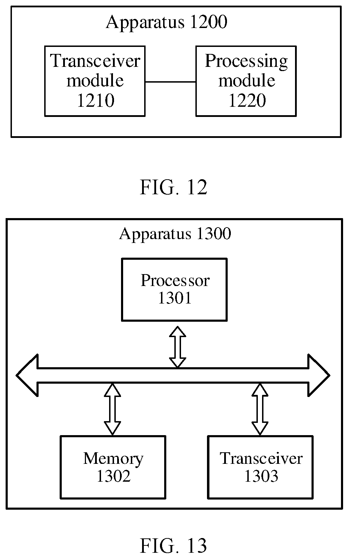

FIG. 12 is a possible example block diagram of an apparatus according to an embodiment of this application. The apparatus 1200 includes a transceiver module 1210 and a processing module 1220. The transceiver module 1210 may include a receiving unit and a sending unit. The processing module 1220 is configured to control and manage an action of the apparatus 1200. The transceiver module 1210 is configured to support the apparatus 1200 in communicating with another network entity. Optionally, the apparatus 1200 may further include a storage unit, and the storage unit is configured to store program code and data of the apparatus 1200.

Optionally, each module in the apparatus 1200 may be implemented by using software.

Optionally, the processing module 1220 may be a processor or a controller, for example, may be a general-purpose central processing unit (central processing unit, CPU), a general-purpose processor, a digital signal processor (digital signal processing, DSP), an application-specific integrated circuit (application specific integrated circuits, ASIC), a field programmable gate array (field programmable gate array, FPGA) or another programmable logic device, a transistor logic device, a hardware component, or any combination thereof. The processing module 1220 may implement or execute various example logical blocks, modules, and circuits described with reference to content disclosed in embodiments of this application. The processor may be a combination of processors implementing a computing function, for example, a combination of one or more microprocessors, or a combination of the DSP and a microprocessor. The transceiver module 1210 may be a communication interface, a transceiver, a transceiver circuit, or the like. The communication interface is a general term. In specific implementation, the communication interface may include a plurality of interfaces, and the storage unit may be a memory.

When the apparatus 1200 is a session management function network element or a chip in the session management function network element, the processing module 1220 in the apparatus 1200 may support the apparatus 1200 in performing actions of the session management function network element in the foregoing method examples, for example, may support the apparatus 1200 in performing step 503 in FIG. 5 and step 908 in FIG. 9.

The transceiver module 1210 may support communication between the apparatus 1200 and an access and mobility management function network element. For example, the transceiver module 1210 may support the apparatus 1200 in performing step 501 and step 503 in FIG. 5; step 601, step 604, step 605, and step 608 in FIG. 6; step 1001, step 1002, step 1007, step 1010, step 1011, step 1016, and step 1017 in FIG. 10; and step 1101, step 1102, step 1107, step 1108, step 1113, step 1114, step 1117, and step 1118 in FIG. 11.

For example, details may be as follows:
In an implementation, the apparatus 1200 includes the transceiver module 1210 and the processing module 1220.

The transceiver module 1210 is configured to: initiate a procedure of a first operation for a first session, and receive, from an access and mobility management function network element, a request to establish user-plane resources for the first session in a process of performing the first operation.

The processing module 1220 is configured to determine a subsequent procedure based on a type of the first operation.

In a possible design, the first operation is modifying the first session; and the processing module 1220 is configured to: when determining the subsequent procedure based on the type of the first operation, abort a procedure of modifying the first session, and perform a procedure of establishing the user-plane resources for the first session.

In a possible design, the first operation is releasing the first session; and the processing module 1220 is configured to: when determining the subsequent procedure based on the type of the first operation, reject the request to establish the user-plane resources for the first session, and continue to perform a procedure of releasing the first session.

In an implementation, the apparatus 1200 includes the transceiver module 1210 and the processing module 1220.

The transceiver module 1210 is configured to: send a first message to an access and mobility management function network element, where the first message is used to request a first operation, and the first operation includes modifying a first session or releasing a first session; and after the session management function network element sends the first message, receive a second message from the access and mobility management function network element, where the second message is used to request to establish user-plane resources for the first session.

The processing module 1220 is configured to: abort a procedure of the first operation, and perform a procedure of establishing the user-plane resources for the first session when determining that no response message for the first message is received and the second message is received.

In an implementation, the apparatus 1200 includes the transceiver module 1210.

The transceiver module 1210 is configured to send a first message to an access and mobility management function network element, where the first message is used to request a first operation, and the first operation includes modifying a first session or releasing a first session; and after sending the first message, receive a second message from the access and mobility management function network element, where the second message is used to request to establish user-plane resources for the first session. The transceiver module 1210 is configured to send a third message to the access and mobility management function network element in response to the second message when the processing module 1220 determines that no response message for the first message is received and the second message is received, where the third message indicates that the user-plane resources for the first session fail to be established or the user-plane resources for the first session are successfully established.

It should be understood that the apparatus 1200 in this embodiment of this application may correspond to the method of the session management function network element in the foregoing method embodiment, for example, the method in FIG. 5. Operations and/or functions of the modules in the apparatus 1200 are respectively used to implement corresponding steps of the method of the session management function network element in the foregoing method embodiment. Therefore, beneficial effects in the foregoing method embodiment can also be implemented. For brevity, details are not described herein again.

When the apparatus 1200 is a terminal device or a chip in the terminal device, the processing module 1220 in the apparatus 1200 may support the apparatus 1200 in performing actions of the session management function network element in the foregoing method examples, for example, may support the apparatus 1200 in performing step 503 in FIG. 5 and step 908 in FIG. 9.

The transceiver module 1210 may support communication between the apparatus 1200 and an access and mobility management function network element. For example, the transceiver module 1210 may support the apparatus 1200 in performing step 602, step 603, step 606, and step 607 in FIG. 6; step 702 and step 703 in FIG. 7; step 804 and step 805 in FIG. 8; step 904, step 905, step 913, and step 914 in FIG. 9; step 1004, step 1005, step 1010, and step 1011 in FIG. 10; and step 1104, step 1105, step 1110, step 1111, and step 1115 in FIG. 11.

For example, details may be as follows:
In an implementation, the apparatus 1200 includes the transceiver module 1210 and the processing module 1220.

The transceiver module 1210 is configured to: send a service request message to an access and mobility management function network element, where the service request message is used to request to establish user-plane resources for a first session; and receive a first message from the access and mobility management function network element, where the first message is used to request a first operation, and the first operation includes modifying the first session or releasing the first session.

The processing module 1220 is configured to cache the first message or a response message for the first message until the transceiver module 1210 receives a service accept message from the access and mobility management function network element. The processing module 1220 invokes the transceiver module 1210 to send the response message for the first message to the access and mobility management function network element.

In an implementation, the apparatus 1200 includes the transceiver module 1210 and the processing module 1220.

The transceiver module 1210 is configured to: send a service request message to an access and mobility management function network element, where the service request message is used to request to establish user-plane resources for a first session; and receive a first message from the access and mobility management function network element, where the first message is used to request a first operation, and the first operation includes modifying the first session or releasing the first session.

The processing module 1220 is configured to: when determining that the service request message has been sent and no response message for the service request message is received, discard the first message.

It should be understood that the apparatus 1200 in this embodiment of this application may correspond to the method of the terminal device, for example, the method in FIG. 5. Operations and/or functions of the modules in the apparatus 1200 are respectively used to implement corresponding steps of the method of the terminal device in the foregoing method embodiment. Therefore, beneficial effects in the foregoing method embodiment can also be implemented. For brevity, details are not described herein again.

When the processing module 1220 in this embodiment of this application is a processor, and the transceiver module 1210 is a transceiver, the apparatus 1200 in this embodiment of this application may be an apparatus 1300 shown in FIG. 13.

FIG. 13 is a schematic diagram of a structure of a communication apparatus 1300 according to an embodiment of this application. As shown in FIG. 13, the apparatus 1300 includes a processor 1301.

When the apparatus 1300 is a session management function network element or a chip in the session management function network element, in a possible implementation, when the processor 1301 is configured to invoke an interface to perform the following actions: initiating a procedure of a first operation for a first session, receiving, from an access and mobility management function network element, a request to establish user-plane resources for the first session in a process of performing the first operation, and determining a subsequent procedure based on a type of the first operation.

When the apparatus 1300 is a session management function network element or a chip in the session management function network element, in a possible implementation, the processor 1301 is configured to invoke an interface to perform the following actions: sending a first message to an access and mobility management function network element, where the first message is used to request a first operation, and the first operation includes modifying a first session or releasing a first session; after the session management function network element sends the first message, receiving a second message from the access and mobility management function network element, where the second message is used to request to establish user-plane resources for the first session; and aborting a procedure of the first operation, and performing a procedure of establishing the user-plane resources for the first session when determining that no response message for the first message is received and the second message is received.

When the apparatus 1300 is a session management function network element or a chip in the session management function network element, in a possible implementation, the processor 1301 is configured to invoke an interface to perform the following actions: sending a first message to an access and mobility management function network element, where the first message is used to request a first operation, and the first operation includes modifying a first session or releasing a first session; after sending the first message, receiving a second message from the access and mobility management function network element, where the second message is used to request to establish user-plane resources for the first session; and sending a third message to the access and mobility management function network element in response to the second message when determining that no response message for the first message is received and the second message is received, where the third message indicates that the user-plane resources for the first session fail to be established or the user-plane resources for the first session are successfully established.

It should be understood that the apparatus 1300 may be further configured to perform other steps and/or operations on the session management function network element side in the foregoing embodiment. For brevity, details are not described herein again.

When the apparatus 1300 is a terminal device or a chip in the terminal device, in a possible implementation, the processor 1301 is configured to invoke an interface to perform the following actions:
sending a service request message to an access and mobility management function network element, where the service request message is used to request to establish user-plane resources for a first session; receiving a first message from the access and mobility management function network element, where the first message is used to request a first operation, and the first operation includes modifying the first session or releasing the first session; and caching the first message or a response message for the first message until receiving a service accept message from the access and mobility management function network element, and sending the response message for the first message to the access and mobility management function network element.

When the apparatus 1300 is a terminal device or a chip in the terminal device, in a possible implementation, the processor 1301 is configured to invoke an interface to perform the following actions:
sending a service request message to an access and mobility management function network element, where the service request message is used to request to establish user-plane resources for a first session; receiving a first message from the access and mobility management function network element, where the first message is used to request a first operation, and the first operation includes modifying the first session or releasing the first session; and when determining that the service request message has been sent and no response message for the service request message is received, discarding the first message.

It should be understood that the apparatus 1300 may be further configured to perform other steps and/or operations on the terminal device side in the foregoing embodiments. For brevity, details are not described herein.

It should be understood that the processor 1301 may invoke the interface to perform the foregoing receiving and sending actions. The invoked interface may be a logical interface or a physical interface. This is not limited. Optionally, the physical interface may be implemented by using a transceiver. Optionally, the apparatus 1300 further includes a transceiver 1303.

Optionally, the apparatus 1300 further includes a memory 1302, and the memory 1302 may store program code in the foregoing method embodiments, so that the processor 1301 invokes the program code.

Specifically, if the apparatus 1300 includes the processor 1301, the memory 1302, and the transceiver 1303, the processor 1301, the memory 1302, and the transceiver 1303 communicate with each other through an inner connection path, to transmit a control signal and/or a data signal. In a possible design, the processor 1301, the memory 1302, and the transceiver 1303 may be implemented by using a chip. The processor 1301, the memory 1302, and the transceiver 1303 may be implemented in a same chip, or may be separately implemented in different chips, or functions of any two of the following: the processor 1301, the memory 1302, and the transceiver 1303 are implemented in one chip. The memory 1302 may store the program code, and the processor 1301 invokes the program code stored in the memory 1302, to implement a corresponding function of the apparatus 1300.

The methods disclosed in embodiments of this application may be applied to a processor or may be implemented by a processor. The processor may be an integrated circuit chip with a signal processing capability. In an implementation process, steps in the foregoing method embodiments can be implemented by using a hardware integrated logical circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or may be a system on chip (system on chip, SoC), or may be a central processing unit (central processor unit, CPU), or may be a network processor (network processor, NP), or may be a digital signal processing circuit (digital signal processor, DSP), or may be a micro control unit (micro controller unit, MCU), or may be a programmable controller (programmable logic device, PLD) or another integrated chip. It may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly executed and accomplished by using a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

It should be understood that, in embodiments of this application, numbers "first", "second", and the like are merely used to distinguish between different objects, for example, to distinguish between different parameter information or messages, and do not constitute a limitation on the scope of embodiments of this application. This embodiment of this application is not limited thereto.

It should be further understood that sequence numbers of the foregoing processes do not mean execution sequences in embodiments of this application. The execution sequences of the processes should be determined based on functions and internal logic of the processes. Numbers or sequence numbers in the foregoing processes are merely for differentiation for ease of description, and should not constitute any limitation on an implementation process of embodiments of this application.

It should also be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

Unless otherwise specified, an expression used in this application similar to an expression that "an item includes one or more of the following: A, B, and C" usually means that the item may be any one of the following: A; B; C; A and B; A and C; B and C; A, B, and C; A and A; A, A, and A; A, A, and B; A, A, and C; A, B, and B; A, C, and C; B and B; B, B and B; B, B and C; C and C; C, C, and C; and another combination of A, B and C. In the foregoing descriptions, three elements A, B, and C are used as an example to describe an optional case of the item. When an expression is "the item includes at least one of the following: A, B, ..., and X", in other words, more elements are included in the expression, a case to which the item is applicable may also be obtained according to the foregoing rule.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist independently physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The foregoing storage medium includes: any medium that can store program code, such as a USB flash drive, a removable hard disk, a read-only memory ROM, a random access memory RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
initiating, by a session management function network element, a procedure of a first operation for a first session;
receiving, by the session management function network element from an access and mobility management function network element, a request to establish user-plane resources for the first session in a process of performing the first operation; and
determining, by the session management function network element, a subsequent procedure based on a type of the first operation.

2. The method according to claim 1, wherein the first operation is modifying the first session; and
the determining, by the session management function network element, a subsequent procedure based on a type of the first operation comprises:
aborting, by the session management function network element, a procedure of modifying the first session, and performing a procedure of establishing the user-plane resources for the first session.

3. The method according to claim 2, further comprising:
stopping, by the session management function network element, a first timer, wherein the first timer comprises a timer that waits for a response message for modifying the first session.

4. The method according to claim 2 or 3, further comprising:
after the session management function network element completes the procedure of establishing the user-plane resources for the first session, re-initiating, by the session management function network element, the procedure of modifying the first session.

5. The method according to any one of claims 2 to 4, wherein the performing, by the session management function network element, a procedure of establishing the user-plane resources for the first session comprises:
sending, by the session management function network element, a first message to the access and mobility management function network element, wherein the first message indicates that the user-plane resources for the first session are successfully established.

6. The method according to claim 5, wherein the first message is a session management context update response message, the session management context update response message comprises one or more of the following: user plane context status information and session management information, the user plane context status information indicates that the user-plane resources for the first session are being activated, and the session management information comprises a related parameter for establishing the user-plane resources for the first session.

7. The method according to claim 1, wherein the first operation is releasing the first session; and
the determining, by the session management function network element, a subsequent procedure based on a type of the first operation comprises:
rejecting, by the session management function network element, the request to establish the user-plane resources for the first session, and continuing to perform a procedure of releasing the first session.

8. The method according to claim 7, further comprising:
receiving, by the session management function network element, a response message for releasing the first session.

9. The method according to claim 7 or 8, wherein the rejecting, by the session management function network element, the request to establish the user-plane resources for the first session comprises:
sending, by the session management function network element, a second message to the access and mobility management function network element, wherein the second message indicates that the user-plane resources for the first session fail to be established.

10. The method according to claim 9, wherein the second message is a session management context update response message, the session management context update response message comprises user plane context status information, and the user plane context status information indicates that the user-plane resources for the first session are deactivated.

11. The method according to claim 9 or 10, wherein the second message comprises a first cause value, and the first cause value indicates a cause why the user-plane resources for the first session fail to be established.

12. The method according to claim 11, wherein the cause why the user-plane resources for the first session fail to be established indicates that the first session is performing the procedure of releasing the first session.

13. The method according to any one of claims 1 to 12, wherein the receiving, by the session management function network element from an access and mobility management function network element, a request to establish user-plane resources for the first session in a process of performing the first operation comprises:
before the session management function network element receives the response message for the first operation, receiving, by the session management function network element from the access and mobility management function network element, the request to establish the user-plane resources for the first session.

14. The method according to any one of claims 1 to 13, wherein the request to establish the user-plane resources for the first session is a session management context update request message, the session management context update request message comprises one or more of the following: an operation type or an identifier of an activated session, the operation type indicates user-plane activation, and the identifier of the activated session comprises an identifier of the first session.

15. A communication apparatus, wherein the apparatus comprises a transceiver unit and a processing unit;
the transceiver unit is configured to: initiate a procedure of a first operation for a first session, and receive, from an access and mobility management function network element, a request to establish user-plane resources for the first session in a process of performing the first operation; and
the processing unit is configured to determine a subsequent procedure based on a type of the first operation.

16. The apparatus according to claim 15, wherein the first operation is modifying the first session; and
the processing unit is specifically configured to: abort a procedure of modifying the first session, and perform a procedure of establishing the user-plane resources for the first session.

17. The apparatus according to claim 16, wherein the processing unit is further configured to stop a first timer, and the first timer comprises a timer that waits for a response message for modifying the first session.

18. The apparatus according to claim 15 or 16, wherein the transceiver unit is further configured to: after completing the procedure of establishing the user-plane resources for the first session, re-initiate the procedure of modifying the first session.

19. The apparatus according to any one of claims 16 to 18, wherein the transceiver unit is further configured to: when performing the procedure of establishing the user-plane resources for the first session, send a first message to the access and mobility management function network element, wherein the first message indicates that the user-plane resources for the first session are successfully established.

20. The apparatus according to claim 19, wherein the first message is a session management context update response message, the session management context update response message comprises one or more of the following: user plane context status information or session management information, the user plane context status information indicates that the user-plane resources for the first session are being activated, and the session management information comprises a related parameter for establishing the user-plane resources for the first session.

21. The apparatus according to claim 15, wherein the first operation is releasing the first session; and
the processing unit is specifically configured to: reject the request to establish the user-plane resources for the first session, and continue to perform a procedure of releasing the first session.

22. The apparatus according to claim 21, wherein the transceiver unit is configured to receive a response message for releasing the first session.

23. The apparatus according to claim 21 or 22, wherein the transceiver unit is configured to: when rejecting the request to establish the user-plane resources for the first session, send a second message to the access and mobility management function network element, wherein the second message indicates that the user-plane resources for the first session fail to be established.

24. The apparatus according to claim 23, wherein the second message is a session management context update response message, the session management context update response message comprises user plane context status information, and the user plane context status information indicates that the user-plane resources for the first session are deactivated.

25. The apparatus according to claim 23 or 24, wherein the second message comprises a first cause value, and the first cause value indicates a cause why the user-plane resources for the first session fail to be established.

26. The apparatus according to claim 25, wherein the cause why the user-plane resources for the first session fail to be established indicates that the first session is performing the procedure of releasing the first session.

27. The apparatus according to any one of claims 15 to 26, wherein the transceiver unit is configured to: before the session management function network element receives the response message for the first operation, receive, from the access and mobility management function network element, the request to establish the user-plane resources for the first session.

28. The apparatus according to any one of claims 15 to 27, wherein the request to establish the user-plane resources for the first session is a session management context update request message, the session management context update request message comprises one or more of the following: an operation type or an identifier of an activated session, the operation type indicates user-plane activation, and the identifier of the activated session comprises an identifier of the first session.

29. A communication apparatus, wherein the communication apparatus comprises a processor, and the processor executes computer-executable instructions stored in a memory, so that the communication apparatus performs the method according to any one of claims 1 to 14.

30. A computer-readable storage medium, wherein the storage medium stores a computer program or instructions, and when the computer program or the instructions is/are executed by a communication apparatus, the method according to any one of claims 1 to 14 is implemented.

31. A communication system, wherein the system comprises a session management function network element and an access and mobility management function network element;
the session management function network element is configured to: initiate a procedure of a first operation for a first session, receive, from an access and mobility management function network element, a request to establish user-plane resources for the first session in a process of performing the first operation, and determine a subsequent procedure based on a type of the first operation; and
the access and mobility management function network element is configured to send the request to establish the user-plane resources for the first session to the session management function network element.

32. The system according to claim 31, wherein the first operation is modifying the first session; and
the session management function network element is configured to: when determining the subsequent procedure based on the type of the first operation, abort a procedure of modifying the first session, and perform a procedure of establishing the user-plane resources for the first session.

33. The system according to claim 32, wherein the session management function network element is configured to: after completing the procedure of establishing the user-plane resources for the first session, re-initiate the procedure of modifying the first session.

34. The system according to claim 31, wherein the first operation is releasing the first session; and
the session management function network element is configured to: when determining the subsequent procedure based on the type of the first operation, reject the request to establish the user-plane resources for the first session, and continue to perform a procedure of releasing the first session.

35. A communication method, wherein the method comprises:
initiating, by a session management function network element, a procedure of a first operation for a first session;
sending, by an access and mobility management function network element, a request to establish user-plane resources for the first session to the session management function network element; and
if the session management function network element receives the request to establish the user-plane resources in a process of performing the first operation, determining, by the session management function network element, a subsequent procedure based on a type of the first operation.

36. The method according to claim 35, wherein the first operation is modifying the first session, and the determining, by the session management function network element, a subsequent procedure based on a type of the first operation comprises:
aborting, by the session management function network element, a procedure of modifying the first session, and performing a procedure of establishing the user-plane resources for the first session.

37. The method according to claim 36, wherein the method further comprises:
after completing the procedure of establishing the user-plane resources for the first session, re-initiating, by the session management function network element, the procedure of modifying the first session.

38. The method according to claim 35, wherein the first operation is releasing the first session; and
the determining, by the session management function network element, a subsequent procedure based on a type of the first operation comprises:
rejecting, by the session management function network element, the request to establish the user-plane resources for the first session, and continuing to perform a procedure of releasing the first session.

39. A communication method, wherein the method comprises:
sending, by a session management function network element, a first message to an access and mobility management function network element, wherein the first message is used to request a first operation, and the first operation comprises modifying a first session or releasing a first session;
after the session management function network element sends the first message, receiving, by the session management function network element, a second message from the access and mobility management function network element, wherein the second message is used to request to establish user-plane resources for the first session; and
aborting, by the session management function network element, a procedure of the first operation, and performing, by the session management function network element, a procedure of establishing the user-plane resources for the first session when the session management function network element determines that no response message for the first message is received and the second message is received.

40. The method according to claim 39, wherein the first operation is modifying the first session; and
the aborting, by the session management function network element, a procedure of the first operation, and performing, by the session management function network element, a procedure of establishing the user-plane resources for the first session when the session management function network element determines that no response message for the first message is received and the second message is received comprises:
when the session management function network element determines that no response message for the first message is received, the second message is received, and no user-plane resources for the first session are requested to be established, aborting, by the session management function network element, the procedure of the first operation, and performing, by the session management function network element, the procedure of establishing the user-plane resources for the first session.

41. The method according to claim 39 or 40, further comprising:
stopping, by the session management function network element, a first timer, wherein the first timer comprises a timer that waits for the response message for the first message.

42. The method according to any one of claims 39 to 41, further comprising:
sending, by the session management function network element, first indication information to the access and mobility management function network element, wherein the first indication information indicates the first operation.

43. The method according to any one of claims 39 to 42, wherein if the first operation is modifying the first session, the first message comprises a PDU session modification command, and the PDU session modification command comprises an identifier of the first session; or if the first operation is releasing the first session, the first message comprises a PDU session release command, and the PDU session release command comprises an identifier of the first session.

44. The method according to any one of claims 39 to 43, wherein the second message is a session management context update request message, the session management context update request message comprises one or more of the following: an operation type or an identifier of an activated session, the operation type indicates user-plane activation, and the identifier of the activated session comprises the identifier of the first session.

45. The method according to any one of claims 39 to 44, wherein the procedure of establishing, by the session management function network element, the user-plane resources for the first session may specifically comprise but is not limited to one or more of the following steps: sending, by the session management function network element, a session modification request message to a user plane function network element, wherein the session modification request message is used to configure downlink tunnel information for the user plane function network element; receiving, by the session management function network element, a session modification response message from the user plane function network element, wherein the session modification response message is used to respond to the session modification request message; and sending, by the session management function network element, a third message to the access and mobility management function network element in response to the second message, wherein the third message indicates that the user-plane resources for the first session are successfully established.

46. The method according to claim 45, wherein the third message is a session management context update response message, the session management context update response message comprises one or more of the following: user plane context status information or session management information, the user plane context status information indicates that the user-plane resources for the first session are being activated, and the session management information comprises a related parameter for establishing the user-plane resources for the first session.

47. The method according to any one of claims 39 to 46, wherein after the performing, by the session management function network element, a procedure of establishing the user-plane resources for the first session, the method further comprises:
sending, by the session management function network element, the first message to the access and mobility management function network element.

48. A communication method, wherein the method comprises:
sending, by a session management function network element, a first message to an access and mobility management function network element, wherein the first message is used to request a first operation, and the first operation comprises modifying a first session or releasing a first session;
after the session management function network element sends the first message, receiving, by the session management function network element, a second message from the access and mobility management function network element, wherein the second message is used to request to establish user-plane resources for the first session; and
sending, by the session management function network element, a third message to the access and mobility management function network element in response to the second message when the session management function network element determines that no response message for the first message is received and the second message is received, wherein the third message indicates that the user-plane resources for the first session fail to be established or the user-plane resources for the first session are successfully established.

49. The method according to claim 48, wherein the first operation is modifying the first session; and
the sending, by the session management function network element, a third message to the access and mobility management function network element in response to the second message when the session management function network element determines that no response message for the first message is received and the second message is received comprises:
when the session management function network element determines that no response message for a first message is received, the second message is received, and no user-plane resources for the first session are requested to be established, sending, by the session management function network element, the third message to the access and mobility management function network element in response to the second message.

50. The method according to claim 48 or 49, wherein when the third message indicates that the user-plane resources for the first session fail to be established, the third message comprises a first cause value, and the first cause value indicates a cause why the user-plane resources for the first session fail to be established.

51. The method according to claim 50, wherein the cause why the user-plane resources for the first session fail to be established indicates that the first session is performing a procedure of the first operation.

52. The method according to claim 50 or 51, wherein when the third message indicates that the user-plane resources for the first session fail to be established, the third message comprises a session management context update response message and the first cause value, the session management context update response message comprises user plane context status information, and the user plane context status information indicates that the user-plane resources for the first session are deactivated.

53. The method according to claim 48 or 49, wherein when the third message indicates that the user-plane resources for the first session are successfully established, the third message is a session management context update response message, the session management context update response message comprises one or more of the following: user plane context status information or session management information, the user plane context status information indicates that the user-plane resources for the first session are being activated, and the session management information comprises a related parameter for establishing the user-plane resources for the first session.

54. The method according to any one of claims 48 to 53, further comprising: sending, by the session management function network element, first indication information to the access and mobility management function network element, wherein the first indication information indicates the first operation.

55. The method according to any one of claims 48 to 54, wherein if the first operation is modifying the first session, the first message comprises a PDU session modification command, and the PDU session modification command comprises an identifier of the first session; and the response message for the first message is a PDU session modification complete command, and the PDU session modification complete command comprises the identifier of the first session; or if the first operation is releasing the first session, the first message comprises a PDU session release command, and the PDU session release command comprises an identifier of the first session; and the response message for the first message is a PDU session release complete command, and the PDU session release complete command comprises the identifier of the first session.

56. The method according to any one of claims 48 to 55, wherein the second message is a session management context update request message, the session management context update request message comprises one or more of the following: an operation type or an identifier of an activated session, the operation type indicates user-plane activation, and the identifier of the activated session comprises the identifier of the first session.

57. The method according to any one of claims 48 to 56, wherein after the session management function network element sends the third message to the access and mobility management function network element, the session management function network element receives the response message for the first message from the access and mobility management function network element.

58. A communication method, wherein the method comprises:
sending, by a terminal device, a service request message to an access and mobility management function network element, wherein the service request message is used to request to establish user-plane resources for a first session;
receiving, by the terminal device, a first message from the access and mobility management function network element, wherein the first message is used to request a first operation, and the first operation comprises modifying the first session or releasing the first session; and
caching, by the terminal device, the first message or a response message for the first message until receiving a service accept message from the access and mobility management function network element, and sending the response message for the first message to the access and mobility management function network element.

59. The method according to claim 58, wherein the terminal device comprises a session management layer and a mobility management layer; and
before the caching, by the terminal device, a response message for the first message, the method further comprises:
sending, by the mobility management layer, the first message to the session management layer, and receiving, by the mobility management layer, the response message for the first message from the session management layer.

60. The method according to claim 58 or 59, wherein the terminal device comprises the session management layer and the mobility management layer; and
the caching, by the terminal device, the first message until receiving a service accept message from the access and mobility management function network element, and sending the response message for the first message to the access and mobility management function network element comprises:
caching, by the mobility management layer, the first message until receiving the service accept message, and sending, by the mobility management layer, the first message to the session management layer; and
receiving, by the mobility management layer, the response message for the first message from the session management layer, and sending, by the mobility management layer, the response message for the first message to the access and mobility management function network element.

61. The method according to any one of claims 58 to 60, further comprising:
receiving, by the terminal device, first indication information from the access and mobility management function network element, wherein the first indication information indicates the first operation; and
caching, by the terminal device, the first message or the response message for the first message based on the first indication information.

62. The method according to any one of claims 58 to 61, wherein if the first operation is modifying the first session, the first message comprises a PDU session modification command, and the PDU session modification command comprises an identifier of the first session; and the response message for the first message is a PDU session modification complete command, and the PDU session modification complete command comprises the identifier of the first session; or if the first operation is releasing the first session, the first message comprises a PDU session release command, and the PDU session release command comprises an identifier of the first session; and the response message for the first message is a PDU session release complete command, and the PDU session release complete command comprises the identifier of the first session.

63. The method according to any one of claims 58 to 62, wherein the service request message comprises uplink data status information, and the uplink data status information indicates the identifier of the first session.

64. The method according to any one of claims 58 to 63, wherein the service accept message comprises an information element indicating a PDU session activation result, and the information element indicating the PDU session activation result indicates that the user-plane resources for the first session are successfully established.

65. The method according to any one of claims 58 to 63, wherein the service accept message comprises an information element indicating a PDU session activation result, and the information element indicating the PDU session activation result indicates that the user-plane resources for the first session fail to be established; or the service accept message comprises an information element indicating a PDU session activation result and/or an information element indicating an error cause of the PDU session activation result, the information element indicating the PDU session activation result indicates that the user-plane resources for the first session fail to be established, and the information element indicating the error cause of the PDU session activation result indicates a cause why the user-plane resources for the first session fail to be established.

66. The method according to claim 65, wherein the cause why the user-plane resources for the first session fail to be established comprises that the first session is performing a procedure of the first operation.

67. The method according to any one of claims 58 to 66, wherein the first operation is modifying the first session; and
after the sending, by the terminal device, the response message for the first message to the access and mobility management function network element, the method further comprises: resending, by the terminal device, the service request message to the access and mobility management function network element.

68. A communication method, wherein the method comprises:
sending, by a terminal device, a service request message to an access and mobility management function network element, wherein the service request message is used to request to establish user-plane resources for a first session;
receiving, by the terminal device, a first message from the access and mobility management function network element, wherein the first message is used to request a first operation, and the first operation comprises modifying the first session or releasing the first session; and
when the terminal device determines that the service request message has been sent and no response message for the service request message is received, discarding, by the terminal device, the first message.

69. The method according to claim 68, wherein the terminal device receives first indication information from the access and mobility management function network element, and the first indication information indicates the first operation; and the discarding, by the terminal device, the first message comprises: discarding, by the terminal device, the first message based on the first indication information.

70. The method according to claim 68 or 69, wherein the service request message comprises uplink data status information, and the uplink data status information indicates an identifier of the first session.

71. The method according to any one of claims 68 to 70, wherein if the first operation is modifying the first session, the first message comprises a PDU session modification command, and the PDU session modification command comprises the identifier of the first session; or if the first operation is releasing the first session, the first message comprises a PDU session release command, and the PDU session release command comprises the identifier of the first session.

72. A communication apparatus, wherein the apparatus comprises a transceiver unit and a processing unit;
the transceiver unit is configured to: send a first message to an access and mobility management function network element, wherein the first message is used to request a first operation, and the first operation comprises modifying a first session or releasing a first session; and after sending the first message, receive a second message from the access and mobility management function network element, wherein the second message is used to request to establish user-plane resources for the first session; and
the processing unit is configured to: abort a procedure of the first operation, and perform a procedure of establishing the user-plane resources for the first session when determining that no response message for the first message is received and the second message is received.

73. The communication apparatus according to claim 72, wherein the first operation is modifying the first session; and the processing unit is configured to: when determining that no response message for the first message is received, the second message is received, and no user-plane resources for the first session are requested to be established, abort the procedure of the first operation, and perform the procedure of establishing the user-plane resources for the first session.

74. The communication apparatus according to claim 72 or 73, wherein the processing unit is configured to stop a first timer, and the first timer comprises a timer that waits for the response message for the first message.

75. The communication apparatus according to any one of claims 72 to 74, wherein the transceiver unit is configured to send first indication information to the access and mobility management function network element, and the first indication information indicates the first operation.

76. The communication apparatus according to any one of claims 72 to 75, wherein if the first operation is modifying the first session, the first message comprises a PDU session modification command, and the PDU session modification command comprises an identifier of the first session; or if the first operation is releasing the first session, the first message comprises a PDU session release command, and the PDU session release command comprises an identifier of the first session.

77. The communication apparatus according to any one of claims 72 to 76, wherein the second message is a session management context update request message, the session management context update request message comprises one or more of the following: an operation type or an identifier of an activated session, the operation type indicates user-plane activation, and the identifier of the activated session comprises the identifier of the first session.

78. The communication apparatus according to any one of claims 72 to 77, wherein that the processing unit invokes the transceiver unit to perform the procedure of establishing the user-plane resources for the first session may specifically comprise the following steps: sending a session modification request message to a user plane function network element, wherein the session modification request message is used to configure downlink tunnel information for the user plane function network element; receiving a session modification response message from the user plane function network element, wherein the session modification response message is used to respond to the session modification request message; and sending a third message to the access and mobility management function network element in response to the second message, wherein the third message indicates that the user-plane resources for the first session are successfully established.

79. The communication apparatus according to claim 78, wherein the third message is a session management context update response message, the session management context update response message comprises one or more of the following: user plane context status information or session management information, the user plane context status information indicates that the user-plane resources for the first session are being activated, and the session management information comprises a related parameter for establishing the user-plane resources for the first session.

80. The communication apparatus according to any one of claims 72 to 79, wherein the transceiver unit is configured to: after performing the procedure of establishing the user-plane resources for the first session, send the first message to the access and mobility management function network element.

81. A communication apparatus, wherein the apparatus comprises a transceiver unit and a processing unit; the transceiver unit is configured to send a first message to an access and mobility management function network element, wherein first message is used to request a first operation, and the first operation comprises modifying a first session or releasing a first session; the transceiver unit is configured to: after sending the first message, receive a second message from the access and mobility management function network element, wherein the second message is used to request to establish user-plane resources for the first session; and the transceiver unit is configured to send a third message to the access and mobility management function network element in response to the second message when the processing unit determines that no response message for the first message is received and the second message is received, wherein the third message indicates that the user-plane resources for the first session fail to be established or the user-plane resources for the first session are successfully established.

82. The communication apparatus according to claim 81, wherein the first operation is modifying the first session; and when the session management function network element determines that no response message for the first message is received, the second message is received, and no user-plane resources for the first session are requested to be established, the session management function network element sends the third message to the access and mobility management function network element in response to the second message.

83. The communication apparatus according to claim 81 or 82, wherein when the third message indicates that the user-plane resources for the first session fail to be established, the third message comprises a first cause value, and the first cause value indicates a cause why the user-plane resources for the first session fail to be established.

84. The communication apparatus according to claim 83, wherein the cause why the user-plane resources for the first session fail to be established indicates that the first session is performing a procedure of the first operation.

85. The communication apparatus according to claim 83 or 84, wherein when the third message indicates that the user-plane resources for the first session fail to be established, the third message comprises a session management context update response message and the first cause value, the session management context update response message comprises user plane context status information, and the user plane context status information indicates that the user-plane resources for the first session are deactivated.

86. The communication apparatus according to claim 81 or 82, wherein when the third message indicates that the user-plane resources for the first session are successfully established, the third message is a session management context update response message, the session management context update response message comprises one or more of the following: user plane context status information or session management information, the user plane context status information indicates that the user-plane resources for the first session are being activated, and the session management information comprises a related parameter for establishing the user-plane resources for the first session.

87. The communication apparatus according to any one of claims 81 to 86, wherein the transceiver unit is configured to send first indication information to the access and mobility management function network element, and the first indication information indicates the first operation.

88. The communication apparatus according to any one of claims 81 to 87, wherein if the first operation is modifying the first session, the first message comprises a PDU session modification command, and the PDU session modification command comprises an identifier of the first session; and the response message for the first message is a PDU session modification complete command, and the PDU session modification complete command comprises the identifier of the first session; or if the first operation is releasing the first session, the first message comprises a PDU session release command, and the PDU session release command comprises an identifier of the first session; and the response message for the first message is a PDU session release complete command, and the PDU session release complete command comprises the identifier of the first session.

89. The communication apparatus according to any one of claims 81 to 88, wherein the second message is a session management context update request message, the session management context update request message comprises one or more of the following: an operation type or an identifier of an activated session, the operation type indicates user-plane activation, and the identifier of the activated session comprises the identifier of the first session.

90. The communication apparatus according to any one of claims 81 to 89, wherein the transceiver unit is configured to: after sending the third message to the access and mobility management function network element, receive the response message for the first message from the access and mobility management function network element.

91. A communication apparatus, wherein the apparatus comprises a transceiver unit and a processing unit; the transceiver unit is configured to: send a service request message to an access and mobility management function network element, wherein the service request message is used to request to establish user-plane resources for a first session; and receive a first message from the access and mobility management function network element, wherein the first message is used to request a first operation, and the first operation comprises modifying the first session or releasing the first session; and the processing unit is configured to cache the first message or a response message for the first message until the transceiver unit receives a service accept message from the access and mobility management function network element, and invoke the transceiver unit to send the response message for the first message to the access and mobility management function network element.

92. The communication apparatus according to claim 91, wherein the apparatus comprises a session management layer and a mobility management layer; and before caching the response message for the first message, the mobility management layer sends the first message to the session management layer, and the mobility management layer receives the response message for the first message from the session management layer.

93. The communication apparatus according to claim 91 or 92, wherein the apparatus comprises the session management layer and the mobility management layer; when caching the first message until receiving the service accept message from the access and mobility management function network element and sending the response message for the first message to the access and mobility management function network element, the mobility management layer caches the first message until receiving the service accept message, and the mobility management layer sends the first message to the session management layer; and the mobility management layer receives the response message for the first message from the session management layer, and the mobility management layer sends the response message for the first message to the access and mobility management function network element.

94. The communication apparatus according to any one of claims 91 to 93, wherein the transceiver unit is configured to receive first indication information from the access and mobility management function network element, and the first indication information indicates the first operation; and the processing unit is configured to cache the first message or the response message for the first message based on the first indication information.

95. The communication apparatus according to any one of claims 91 to 94, wherein if the first operation is modifying the first session, the first message comprises a PDU session modification command, and the PDU session modification command comprises an identifier of the first session; and the response message for the first message is a PDU session modification complete command, and the PDU session modification complete command comprises the identifier of the first session; or if the first operation is releasing the first session, the first message comprises a PDU session release command, and the PDU session release command comprises an identifier of the first session; and the response message for the first message is a PDU session release complete command, and the PDU session release complete command comprises the identifier of the first session.

96. The communication apparatus according to any one of claims 91 to 95, wherein the service request message comprises uplink data status information, and the uplink data status information indicates the identifier of the first session.

97. The communication apparatus according to any one of claims 91 to 96, wherein the service accept message comprises an information element indicating a PDU session activation result, and the information element indicating the PDU session activation result indicates that the user-plane resources for the first session are successfully established.

98. The communication apparatus according to claim 97, wherein the service accept message comprises an information element indicating a PDU session activation result, and the information element indicating the PDU session activation result indicates that the user-plane resources for the first session fail to be established; or the service accept message comprises an information element indicating a PDU session activation result and an information element indicating an error cause of the PDU session activation result, the information element indicating the PDU session activation result indicates that the user-plane resources for the first session fail to be established, and the information element indicating the error cause of the PDU session activation result indicates a cause why the user-plane resources for the first session fail to be established.

99. The communication apparatus according to claim 98, wherein the cause why the user-plane resources for the first session fail to be established comprises that the first session is performing a procedure of the first operation.

100. The communication apparatus according to any one of claims 91 to 99, wherein the first operation is modifying the first session; and after sending the response message for the first message to the access and mobility management function network element, the transceiver unit is configured to resend the service request message to the access and mobility management function network element.

101. A communication apparatus, wherein the apparatus comprises a transceiver unit and a processing unit; the transceiver unit is configured to: send a service request message to an access and mobility management function network element, wherein the service request message is used to request to establish user-plane resources for a first session; and receive a first message from the access and mobility management function network element, wherein the first message is used to request a first operation, and the first operation comprises modifying the first session or releasing the first session; and the processing unit is configured to: when determining that the service request message has been sent and no response message for the service request message is received, discard the first message.

102. The communication apparatus according to claim 101, wherein the transceiver unit is configured to receive first indication information from the access and mobility management function network element, and the first indication information indicates the first operation; and the processing unit is configured to discard the first message based on the first indication information.

103. The communication apparatus according to claim 101 or 102, wherein the service request message comprises uplink data status information, and the uplink data status information indicates an identifier of the first session.

104. The communication apparatus according to any one of claims 101 to 103, wherein if the first operation is modifying the first session, the first message comprises a PDU session modification command, and the PDU session modification command comprises the identifier of the first session; or if the first operation is releasing the first session, the first message comprises a PDU session release command, and the PDU session release command comprises the identifier of the first session.
